# EUROPEAN PATENT SPECIFICATION

(11) **EP 4 280 295 B1**
(45) Date of publication and mention of the grant of the patent: **07.01.2026**
(21) Application number: 21965026.4
(22) Date of filing: 23.11.2021
(51) Int. Cl.: H01M 4/13, H01M 10/04, H01M 10/0583, H01M 50/538

(54) **ELECTRODE ASSEMBLY, MANUFACTURING METHOD THEREFOR, BATTERY CELL, BATTERY, AND ELECTRIC APPARATUS**
ELEKTRODENANORDNUNG, HERSTELLUNGSVERFAHREN DAFÜR, BATTERIEZELLE, BATTERIE UND ELEKTRISCHE VORRICHTUNG
ENSEMBLE ÉLECTRODE, PROCÉDÉ POUR SA FABRICATION, ÉLÉMENT DE BATTERIE, BATTERIE ET APPAREIL ÉLECTRIQUE

(43) Date of publication of application: 22.11.2023
(73) Proprietor: Contemporary Amperex Technology Co., Limited, Ningde, Fujian 352100 (CN); Jiangsu Contemporary Amperex Technology Limited, Liyang City, Jiangsu 213300 (CN)
(72) Inventor: XIAO, Haihe, Ningde, Fujian 352100 (CN); ZHANG, Xiaowen, Ningde, Fujian 352100 (CN); LI, Baiqing, Ningde, Fujian 352100 (CN); JIN, Haizu, Ningde, Fujian 352100 (CN)
(74) Representative: Gong, Jinping
(86) International application number: PCT/CN2021/132467
(87) International publication number: WO 2023/092284

(56) References cited:
- EP-A1- 3 907 807
- WO-A1-2017/089320
- CN-A- 107 735 896
- CN-A- 108 475 826
- CN-A- 113 394 373
- CN-A- 113 394 373
- FR-A1- 2 394 900
- GB-A- 762 145
- JP-A- H03 116 663
- US-A1- 2012 288 747
- US-A1- 2021 184 242

## Description

### TECHNICAL FIELD

This application relates to the field of batteries, and in particular, to an electrode assembly and a manufacturing method therefor, a battery cell, a battery, and an electric apparatus.

### BACKGROUND

At present, batteries have been widely used in energy storage power supply systems such as hydroelectric power plants, thermal power plants, wind power plants, and solar power plants, and many other fields including electric vehicles such as electric bicycles, electric motorcycles, and electric cars, military equipment, and aerospace.

Stacked batteries are an important battery type. However, due to structural limitations, the production efficiency of the stacked batteries is low.
CN 113 394 373 A describes a battery cell, a preparation method thereof and a battery. JP H03 116663 A discloses a toner for developing negative chargeable electrostatic charge image. WO 2017/089320 A1 refers to a cross-woven electrode assembly. FR 2 394 900 A1 describes a storage battery and method of making the same. US 2012/288747 A1 discloses an electrochemical device. EP 3 907 807 A1 refers to an electrode assembly and a forming method and production system therefor, secondary battery, and battery module and apparatus. GB 762 145 A refers to improvements in electrode assemblies for electric batteries.

### SUMMARY

This application provides an electrode assembly, a battery cell, a battery, an electric apparatus, and a manufacturing method for the electrode assembly, so as to improve the production efficiency of stacked batteries. The invention is set out in the appended claim set.

To achieve the foregoing objective, the electrode assembly, according to any of claims 1-11, provided in this application includes:
a first electrode plate, being folded back and forth in a first direction, so that the first electrode plate includes a plurality of first laminates connected and stacked in sequence; and
a second electrode plate, being opposite the first electrode plate in polarity and being folded once in a second direction, so that the second electrode plate includes two second laminates connected to each other, where the second direction is perpendicular or parallel to the first direction, and the second laminates and the first laminates are alternately stacked in sequence,

wherein the second electrode plate (2) is provided with a fold guiding portion (28) to guide folding of the second electrode plate (2),
wherein the fold guiding portion (28) is tilted with respect to a width direction of the second electrode plate (2).

Based on the foregoing disposition, the production efficiency of stacked batteries can be effectively improved by shortening the time for cutting and enhancing the stacking efficiency.

In some embodiments, a tab of the first electrode plate is located on an edge, other than a bending portion, of the first electrode plate; and/or a tab of the second electrode plate is located on an edge, other than a bending portion, of the second electrode plate. When the tab of the first electrode plate and/or the second electrode plate is located on the edge other than the bending portion, the tab is not easily damaged during folding, leading to higher structural reliability.

In some embodiments, the second direction is perpendicular to the first direction, the tab of the first electrode plate is located on an edge of the first electrode plate adjacent to the bending portion, and the tab of the second electrode plate is located at an end of the second electrode plate farther away from the bending portion. Based on this, tabs are led out in a folding direction of the second electrode plate when the first electrode plate and the second electrode plate are stacked into orthogonal "Z+U" shapes. In this way, the tabs of the first electrode plate and the second electrode plate can be easily led out from the same side or different sides in the second direction. Therefore, the battery cell can be designed with positive and negative electrode terminals being provided on the same side or different sides.

In some embodiments, the second direction is perpendicular to the first direction, and only one of any two adjacent first laminates is provided with the tab, and the first laminate not provided with the tab is wrapped in the bending portion of the second electrode plate. This facilitates physical isolation of the positive and negative electrode tabs and prevents short circuit therebetween.

In some embodiments, the second direction is parallel to the first direction, the tab of the first electrode plate is located on an edge of the first electrode plate adjacent to the bending portion, and the tab of the second electrode plate is located on an edge of the second electrode plate adjacent to the bending portion. Based on this, tabs are led out in a direction perpendicular to the folding direction of the second electrode plate when the first electrode plate and the second electrode plate adopt the orthogonal "Z+U"-shape stacking manner. In this way, the tabs of the first electrode plate and the second electrode plate can be easily led out from the same side or different sides in a longitudinal direction of the first electrode plate. Therefore, the battery cell can be designed with the positive and negative electrode terminals being provided on the same side or different sides.

In some embodiments, the tabs of the first electrode plate and the second electrode plate are located on the same side or on opposite sides. When the tab of the first electrode plate and the tab of the second electrode plate are located on the same side, design requirements for a battery cell with positive and negative electrode terminals provided on the same side can be easily satisfied. When the tab of the first electrode plate and the tab of the second electrode plate are located on opposite sides, design requirements for a battery cell with negative electrode terminals provided on opposite sides can be easily satisfied.

In some embodiments, the tab of the first electrode plate and the tab of the second electrode plate are located on the same side, and the tab of the first electrode plate and the tab of the second electrode plate are arranged in a staggered manner in the first direction. In this way, the positive and negative electrode tabs can be effectively separated to prevent mutual interference between the positive and negative electrode tabs on the same side.

In some embodiments, at least one of the two second laminates of the second electrode plate is provided with a tab. When only one of the two second laminates of the second electrode plate is provided with a tab, the structure is relatively simple. When the two second laminates of the second electrode plate each have a tab, both the electric energy transfer efficiency and the operation reliability are improved.

In some embodiments, the second electrode plate has an inert region. The inert region includes the bending portion of the second electrode plate, and the inert region is not coated with an active substance. Based on this, an area of the portion of the negative electrode plate beyond the positive electrode plate can be easily controlled.

In some embodiments, a surface, facing the first electrode plate, of the inert region on the second electrode plate is provided with an insulating substance. This helps improve insulation between the first electrode plate and the second electrode plate, improving the safety performance.

Under the guidance of the fold guiding portion, the first electrode plate and/or the second electrode plate can be folded more easily, helping further improve the production efficiency of the stacked batteries.

In some embodiments, the fold guiding portion includes an indentation or a crease. Both the indentation and the crease can effectively guide folding, facilitating folding.

In some embodiments, the fold guiding portion is in the form of a solid line or an interrupted line. When the fold guiding portion is in the form of a solid line, the structure of the fold guiding portion is simple and easy to manufacture. When the fold guiding portion is in the form of an interrupted line, an area occupied by the fold guiding portion is small, helping maximize the structural strength of the electrode plates while facilitating the folding of the electrode plates.

In some embodiments, the fold guiding portion is in the form of a broken line. Compared with other types of interrupted lines, the broken lines are easier to manufacture.

In some embodiments, the fold guiding portion is in the form of a dotted line or a dashed line. In this case, the fold guiding portion in the form of a broken line is easy to manufacture.

The fold guiding portion is tilted with respect to the width direction of the first electrode plate and/or the second electrode plate, helping reduce the risk of lithium precipitation and improve the safety performance.

In some embodiments, the electrode assembly includes a separator, where the separator separates the first electrode plate from the second electrode plate, and two separators provided in a thickness direction on opposite sides of one second electrode plate are folded and wrap an edge of the second electrode plate not provided with a tab. Based on this, the risk of short circuit can be reduced, improving the safety performance.

In some embodiments, the first electrode plate is a negative electrode plate, and the second electrode plate is a positive electrode plate. In this way, an area of the negative electrode plate is larger than an area of the positive electrode plate, effectively preventing lithium precipitation.

The battery cell provided in this application includes a housing and further includes the electrode assembly in the embodiments of this application, where the electrode assembly is provided inside the housing. The production efficiency of the electrode assembly is improved, so the production efficiency of the battery cell including the electrode assembly is improved.

In some embodiments, the tab of the second electrode plate is located at an end of the second electrode plate farther away from the bending portion, and the bending portion of the second electrode plate is in contact with an inner wall of the housing. In this way, the electrode assembly can be in contact with the housing for heat transfer, improving the heat dissipation performance of the battery cell.

In some embodiments, a surface, farther away from the first electrode plate, of the bending portion of the second electrode plate faces the direction of gravity. In this way, the second electrode plate can come easily in full contact with the inner wall of the housing under gravity, so as to improve heat dissipation effects.

The battery provided in this application includes a packaging box and further includes the battery cell in the embodiments of this application, where the battery cell is provided in the packaging box. The production efficiency of the battery cell is improved, so the production efficiency of the battery including the battery cell is improved.

The electric apparatus provided in this application includes a body and further includes the battery cell or the battery in the embodiments of this application, where the battery cell provides electric energy for the body. Based on this, the production efficiency of the electric apparatus can be effectively improved.

The manufacturing method for an electrode assembly provided in this disclosure includes:
providing a first electrode plate and folding the first electrode plate back and forth in a first direction, so that the first electrode plate includes a plurality of first laminates connected and stacked in sequence;
providing a second electrode plate opposite the first electrode plate in polarity, and folding the second electrode plate once in a second direction, so that the second electrode plate includes two second laminates connected to each other, where the second direction is perpendicular or parallel to the first direction; and
inserting the second electrode plate into the first electrode plate so that the second laminates and the first laminates are alternately stacked in sequence.

High efficiency can be implemented when the foregoing method is used to manufacture the electrode assembly.

In some embodiments, before the folding the second electrode plate once in a second direction, the method further includes: providing two separators in a thickness direction on opposite sides of the second electrode plate, and making the two separators, provided on opposite sides of one second electrode plate in the thickness direction, fold and wrap an edge of the second electrode plate not provided with a tab.

Before the second electrode plate is folded, two separators are used to double-wrap the edge of the second electrode plate not provided with a tab. This improves the safety performance of the electrode assembly while facilitating the folding of the second electrode plate.

In this application, the first electrode plate of the electrode assembly is folded into a Z shape, the second electrode plate is folded in half into a U shape, and the folded second electrode plate is inserted into the first electrode plate. Compared with one-by-one stacking, this stacking manner is more efficient, helping improve the production efficiency of stacked batteries.

The foregoing description is merely an overview of the technical solutions in this application. In order to better understand the technical means in this application, to achieve implementation according to content of the specification, and to make the above and other objects, features and advantages in this application more obvious and easy to understand, the following describes specific embodiments of this application.

### BRIEF DESCRIPTION OF DRAWINGS

The accompanying drawings described herein are intended for better understanding of this application, and constitute a part of this application. Exemplary embodiments and descriptions thereof in this application are intended to interpret this application and do not constitute any improper limitation on this application. In the accompanying drawings:
FIG. 1 is a schematic diagram of an electric apparatus according to an embodiment of this application.
FIG. 2 is a schematic diagram of a battery according to an embodiment of this application.
FIG. 3 is a three-dimensional schematic diagram of a battery cell according to a first embodiment of this application.
FIG. 4 is a front view of the battery cell according to the first embodiment of this application.
FIG. 5 is a cross-sectional view of FIG. 4 along A-A.
FIG. 6 is an enlarged schematic diagram of portion I in FIG. 5.
FIG. 7 is an enlarged schematic diagram of portion II in FIG. 5.
FIG. 8 is a cross-sectional view of FIG. 4 in a B-B direction.
FIG. 9 is an enlarged schematic diagram of portion III in FIG. 8.
FIG. 10 is a schematic diagram of the stacking process of a first electrode plate and a second electrode plate according to the first embodiment.
FIG. 11 is a side view of FIG. 10.
FIG. 12 is an enlarged schematic diagram of portion IV in FIG. 11.
FIG. 13 is an enlarged schematic diagram of portion V in FIG. 11.
FIG. 14 is a three-dimensional schematic diagram of a battery cell according to a second embodiment of this application.
FIG. 15 is a longitudinal section view of the battery cell according to the second embodiment of this application.
FIG. 16 is a front view of an electrode assembly according to the second embodiment of this application.
FIG. 17 is a schematic diagram of a stacking process of a first electrode plate and a second electrode plate according to the second embodiment of this application.
FIG. 18 is a side view of FIG. 17.
FIG. 19 is a side view of the electrode assembly according to the second embodiment of this application.
FIG. 20 is an enlarged schematic diagram of portion VI in FIG. 19.
FIG. 21 is an enlarged schematic diagram of portion VII in FIG. 19.
FIG. 22 is a partially enlarged schematic diagram of a position of contact between an electrode assembly and a housing body according to the second embodiment of this application.
FIG. 23 is a three-dimensional schematic diagram of an electrode assembly according to a third embodiment of this application.
FIG. 24 is a schematic diagram of a stacking process of a first electrode plate and a second electrode plate according to the third embodiment of this application.
FIG. 25 is a three-dimensional schematic diagram of an unfolded second electrode plate with a fold guiding portion according to an embodiment of this application.
FIG. 26 is an example variation of the second electrode plate illustrated in FIG. 25.
FIG. 27 is a partially enlarged schematic diagram of an indentation in the second electrode plate illustrated in FIG. 26.
FIG. 28 is an example variation of the second electrode plate illustrated in FIG. 25.
FIG. 29 is an enlarged schematic diagram of portion M in FIG. 28.
FIG. 30 is an example variation of the second electrode plate illustrated in FIG. 25.
FIG. 31 is an enlarged schematic diagram of portion N in FIG. 30.
FIG. 32 is an example variation of the second electrode plate illustrated in FIG. 25.
FIG. 33 is a schematic diagram of wrapping a second electrode plate by a separator according to an embodiment of this application.
FIG. 34 illustrates a manufacturing method for an electrode assembly according to an embodiment of this application.

### Reference signs:

100: electric apparatus; 101: vehicle; 102: controller; 103: traction device; 104: motors; 105: body;
10: battery;
20: battery cell; 201: electrode assembly; 202: housing; 203: housing body; 204: end cap; 205: adapter; 206: electrode terminal; 20a: negative electrode terminal; 20b: positive electrode terminal;
30: packaging box; 301: box body; 302: box cover;
1: first electrode plate; 11: first laminate; 12: first tab; 13: negative electrode tab; 14: negative electrode plate; 15: tab;
2: second electrode plate; 21: second laminate; 22: second tab; 23: positive electrode tab; 24: positive electrode plate; 25: bending portion; 26: inert region; 27: insulating substance; 28: fold guiding portion; 281: indentation; 282: crease; 29: active substance;
3: separator; 31: flange;
X: first direction; Y: second direction; and Z: third direction.

### DESCRIPTION OF EMBODIMENTS

The following describes in detail the embodiments of technical solutions of this application with reference to the accompanying drawings. The following embodiments are merely used to describe technical solutions in this application more explicitly, and therefore they are merely used as examples and do not constitute limitations on the protection scope of this application.

Unless otherwise defined, all technical and scientific terms used herein shall have the same meanings as commonly understood by those skilled in the art to which this application belongs. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as an indication or implication of relative importance or implicit indication of the number, specific sequence or dominant-subordinate relationship of the technical features indicated. In the description of this application, "a plurality of" means at least two unless otherwise specifically stated.

The term "embodiment" described herein means that specific features, structures or characteristics in combination with descriptions of the embodiments may be incorporated in at least one embodiment of this application. The word "embodiment" in various positions in the specification does not necessarily refer to the same embodiment, or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the descriptions of embodiments of this application, the orientations or positional relationships indicated by the technical terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships shown in the accompanying drawings, are merely intended to facilitate the descriptions of embodiments of this application and simplify the descriptions, are not intended to indicate or imply that the apparatuses or components mentioned in this application must have specific orientations, or be constructed and operated for a specific orientation, and therefore shall not be construed as a limitation to embodiments of this application.

In the descriptions of embodiments of this application, unless otherwise specified and defined explicitly, the technical terms "installment", "link", "connection", and "fix" should be understood in their general senses. For example, the terms may be a fixed connection, a detachable connection, or an integrated connection; or may be a mechanical connection or an electrical connection; or may be a direct connection, or an indirect connection through an intermediate medium; or may be an internal connection between two components or an interactive relationship between two components. Persons of ordinary skill in the art can understand specific meanings of these terms in this application as appropriate to specific situations.

With the rapid development of electronic products and electric apparatus such as electric vehicles, batteries have been widely used in energy storage power systems such as hydroelectric power plants, thermal power plants, wind power plants, and solar power plants, and many other fields including electric vehicles such as electric bicycles, electric motorcycles, and electric cars, military equipment, and aerospace. With continuous expansion of application fields of traction batteries, market demands for the traction batteries are also expanding, which requires higher production efficiency of batteries.

As an important battery type, stacked batteries feature more open structures, higher internal space utilization, and higher energy density in comparison to wound batteries, and therefore are a worthwhile structural form. At present, however, a plurality of positive electrode plates and negative electrode plates need to be alternately stacked in sequence for producing stacked batteries, resulting in low production efficiency for the stacked batteries. This has become an important factor hindering the development of stacked batteries. Therefore, it is crucial to improve the production efficiency of stacked batteries.

In order to improve the production efficiency of stacked batteries, this application provides an electric apparatus, a battery, a battery cell, and an electrode assembly and a manufacturing method therefor.

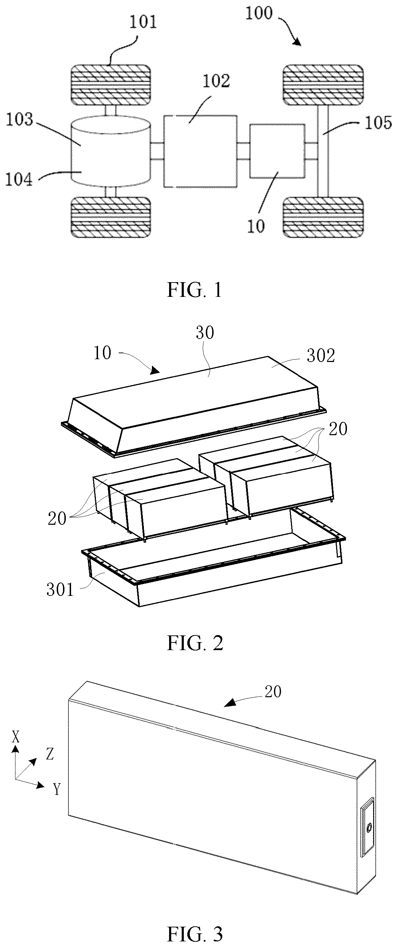

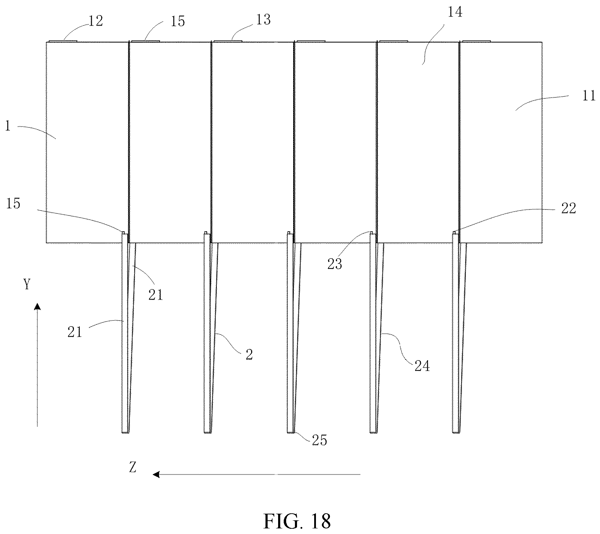

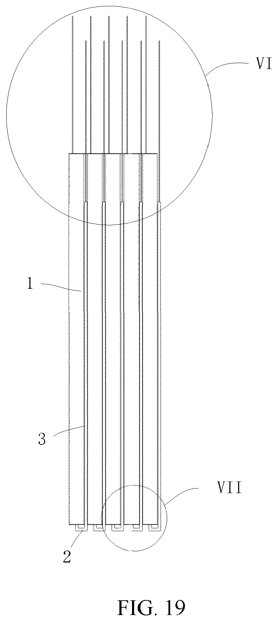

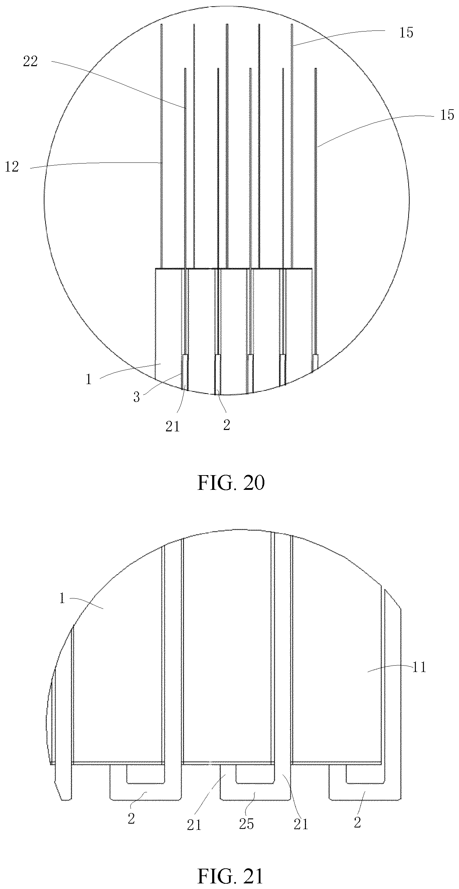

FIG. 1 to FIG. 34 illustrate the electric apparatus, the battery, the battery cell, and the electrode assembly and the manufacturing method therefor according to some embodiments of this application.

Next, this application will be described with reference to FIG. 1 to FIG. 34.

FIG. 1 illustrates an example structure of an electric apparatus 100.

Referring to FIG. 1, the electric apparatus 100 is an apparatus that uses a battery cell 20 as a power source, and includes the battery cell 20 and a body 105. A battery 10 is provided on the body 105 and provides electric energy for the body 105. Alternatively, the electric apparatus 100 includes a body 105 and a battery 10 including the battery cell 20. The battery 10 is provided on the body 105, and the battery cell 20 of the battery 10 provides electric energy for the body 105.

The electric apparatus 100 may be an electric device such as a mobile phone, a tablet computer, a laptop computer, an electric toy, an electric tool, an electric bicycle, an electric vehicle, a ship, or a spacecraft. The electric toy may include a fixed or mobile electric toy, for example, a game console, an electric car toy, an electric ship toy, an electric aircraft toy, and the like. The spacecraft may include an aircraft, a rocket, a space shuttle, a spaceship, and the like.

The electric apparatus 100 includes a traction source. The traction source includes a battery 10, and the battery 10 provides driving force for the electric apparatus 100. In some embodiments, the driving force of the electric apparatus 100 is totally electric energy. In this case, the traction source only includes the battery 10. In other embodiments, the driving force of the electric apparatus 100 includes electric energy and other energy sources (for example, mechanical energy). In this case, the traction source includes the battery 10 and other devices such as an engine.

A vehicle 101 is used as an example of the electric apparatus 100. Referring to FIG. 1, in some embodiments, the electric apparatus 100 is a battery electric vehicle, a hybrid electric vehicle, an extended-range electric vehicle, or another new energy vehicle, and includes traction devices 103 such as the battery 10, a controller 102, and a motor 104. The battery 10 is electrically connected to the traction devices 103 such as the motor 104 through the controller 102, so that the battery 10 can supply electricity to the traction devices 103 such as the motor 104 under control of the controller 102.

As can be seen, the battery 10 and the battery cell 20 thereof are important components of the electric apparatus 100.

FIG. 2 illustrates an example structure of the battery 10.

Referring to FIG. 2, the battery 10 includes a packaging box 30 and the battery cell 20 provided in the packaging box 30. The packaging box 30 includes a box body 301 and a box cover 302. The box body 301 and the box cover 302 are snap-fitted to form a closed space inside the packaging box 30 for accommodating the battery cell 20. At least two battery cells 20 are provided in the packaging box 30, so as to provide more electric energy for meeting higher electricity requirements. The battery cells 20 in the battery 10 are connected in series, parallel, or series-parallel to implement higher capacity or power. It should be noted that in FIG. 2 the battery cells 20 are sketched.

As can be seen, the battery cell 20 is the smallest battery unit for providing electric energy, and serves as the core component of the battery 10 and the electric apparatus 100. The performance of the battery cell 20 directly affects the performance of the battery 10 and the electric apparatus 100, and the production efficiency of the battery cell 20 also directly affects the production efficiency of the electric apparatus 100 and the battery 10. Improvement of the production efficiency and performance of the battery cell 20 helps improve the production efficiency and performance of the electric apparatus 100 and the battery 10.

The battery cell 20 may be a lithium-ion battery or another type of battery cell, and may come in various shapes such as a square shape or a cylinder shape.

FIG. 3 to FIG. 33 illustrate example structures of the battery cell.

Referring to FIG. 3 to FIG. 33, the battery cell 20 includes a housing 202, an electrode assembly 201, an adapter 205, and an electrode terminal 206.

The housing 202 is used to accommodate components (such as the electrode assembly 201 and the adapter 205) inside the housing 202, so as to protect the components located inside the housing 202. The housing 202 includes a housing body 203 and an end cap 204. The end cap 204 covers an opening at the end of the housing body 203 so that a closed space is formed inside the housing 202 to accommodate the electrode assembly 201 and the like.

The electrode assembly 201 is used to generate electric energy. Provided inside the housing 202, the electrode assembly 201 supplies electric energy through electrochemical reaction with electrolyte injected into the housing 202. The electrode assembly 201 includes electrode plates, specifically a first electrode plate 1 and a second electrode plate 2 that are combined. The first electrode plate 1 and the second electrode plate 2 are electrode plates of opposite polarity. When one electrode plate is a negative electrode plate 14 (also referred to as the anode plate), the other is a positive electrode plate 24 (also referred to as the cathode plate). Thickness of the first electrode plate 1 and the second electrode plate 2 is 0.05 mm to 0.2 mm. After being combined, the first electrode plate 1 and the second electrode plate 2 form a stacking structure and are separated by a separator 3, so as to prevent short circuit between the first electrode plate 1 and the second electrode plate 2. The first electrode plate 1 and the second electrode plate 2 each have a tab 15, through which the electric energy generated by the electrode assembly 201 is transmitted outsides. The tabs 15 of the first electrode plate 1 and the second electrode plate 2 are referred to as a first tab 12 and a second tab 22 respectively, for ease of differentiation.

The tabs 15 are portions, not coated with an active substance 29, of the positive and negative electrode plates of the electrode assembly 201. The tabs extend from portions of the positive and negative electrode plates coated with the active substance 29 and are electrically connected to an external circuit through the adapter 205 and the electrode terminals 206 for transfer of electric energy. The tab 15 of the negative electrode plate 14 is referred to as a negative electrode tab 13, and the tab 15 of the positive electrode plate 24 is referred to as a positive electrode tab 23.

The adapter 205 is provided in the housing 202 and is located between the tab 15 of the electrode assembly 201 and the electrode terminal 206 for implementing an electrical connection between the electrode assembly 201 and the electrode terminal 206, so that the electric energy generated by the electrode assembly 201 is transmitted to the electrode terminal 206. The adapter 205 corresponding to the positive electrode tab is referred to as a positive adapter, and the adapter 205 corresponding to the negative electrode tab is referred to as a negative adapter.

The electrode terminal 206 is electrically connected to the electrode assembly 201 via the adapter 205 and is used to connect to an external circuit, so that the electric energy generated by the electrode assembly 201 is transmitted outside of the battery cell 20. The electrode terminal 206 corresponding to the negative electrode tab 13 is referred to as a negative electrode terminal 20a and the electrode terminal 206 corresponding to the positive electrode tab 23 is referred to as a positive electrode terminal 20b.

As can be seen, the electrode assembly 201 is an important component of the battery cell 20 and is the key to enabling the battery cell 20 to provide electric energy.

The first electrode plate 1 and the second electrode plate 2 in the electrode assembly 201 can be combined mainly in a winding manner or in a stacking manner. When the first electrode plate 1 and the second electrode plate 2 are combined in the winding manner, the battery cell 20 is referred to as a wound battery; and when the first electrode plate 1 and the second electrode plate 2 are combined in the stacking manner, the battery cell 20 is referred to as a stacked battery. Unlike wound batteries, stacked batteries do not have corners and feature a more open structure. In addition, high internal space utilization and high energy density are a plus for wide application of the stacked batteries.

However, low productivity severely hinders the development of stacked batteries.

Unlike an electrode assembly 201 of a wound battery, an electrode assembly 201 of the stacked battery cannot be formed quickly through fast winding. In the related art, the electrode assembly 201 of the stacked battery can only be formed through one-by-one stacking. That is, the first electrode plates 1 and the second electrode plates 2 that have been cut out can only be stacked one by one, so that the first electrode plates 1 and the second electrode plates 2 are alternately stacked in sequence and separated by the separators 3. In this one-by-one stacking manner, each individual electrode plate needs to be cut, and metal burrs and metal debris will inevitably be present on edges of the cut metal. If such metal burrs or debris enter a stack of the first electrode plates 1 and the second electrode plates 2, the electrode plates are exposed to risks of penetration and short circuit. In addition, electrode plates are stacked one after another. Therefore, the production efficiency is low.

For this reason, this application improves the structure and manufacturing method of the electrode assembly 201 of the battery cell 20. This can further improve the safety performance of the stacked batteries and improve the production efficiency of the stacked batteries.

FIG. 3 to FIG. 33 illustrate the example structures of the battery cell 20 and the electrode assembly 201 thereof.

Referring to FIG. 3 to FIG. 33, in this application, the electrode assembly 201 includes a first electrode plate 1 and a second electrode plate 2. The first electrode plate 1 is folded back and forth in a first direction X, so that the first electrode plate 1 includes a plurality of first laminates 11 connected and stacked in sequence. The second electrode plate 2 is opposite the first electrode plate 1 in polarity and is folded once in a second direction Y, so that the second electrode plate 2 includes two second laminates 21 connected to each other. The second direction Y is perpendicular or parallel to the first direction X. The second laminates 21 and the first laminates 11 are alternately stacked in sequence.

The first electrode plate 1 is folded back and forth in the first direction X, which is referred to as a Z-folding (S-folding or W-folding) manner, and the second electrode plate 2 is folded once in the second direction Y, which is referred to as a U-folding (or V-folding) manner. Therefore, the electrode assembly 201 adopts a "Z+U"-shape stacking manner based on the foregoing dispositions.

In the "Z+U"-shape stacking manner, instead of stacking the electrode plates one by one, the first electrode plate 1 is folded into a Z shape and a plurality of second electrode plates 2 are folded in half into U shapes, and then the plurality of second electrode plates 2 can be inserted into the first electrode plate 1 simultaneously, so that the second laminates 21 and the first laminates 11 are alternately stacked in sequence. Therefore, compared with one-by-one stacking manner, this manner can effectively improve the production efficiency of the electrode assembly 201, the battery cell 20, the battery 10, and the electric apparatus 100.

Because the first electrode plate 1 is folded into a Z shape and the first laminates 11 are connected, the first electrode plate 1 does not need to be cut into pieces of first laminate 11 in advance. In addition, the second electrode plate 2 is folded in half into a U shape and two second laminates 21 are connected, the second electrode plate 2 does not need to be cut into two second laminates 21 in advance. Therefore, the corresponding cutting procedure can be omitted, saving the time for cutting and improving the production efficiency.

In addition, the second electrode plate 2 is folded in half into a U shape. In a stacking process, dozens of second electrode plates 2 are inserted into the first electrode plate 1 simultaneously to complete assembly with the first electrode plate 1, without a need of stacking second laminates 21 one after another on the first laminate 11. This also helps improve the production efficiency.

It can be seen that the "Z+U"-shape stacking manner used in this application can shorten the time for cutting and improve the stacking efficiency, thereby effectively improving the production efficiency of stacked batteries.

In addition, as compared with the one-by-one stacking manner in which laminates need to be cut and cuts are present, in the "Z+U"-shape stacking manner, neither the first laminates 11 of the first electrode plate 1 nor the second laminates 21 of the second electrode plate 2 need to be cut, effectively reducing the number of cuts, This helps lower the probability of occurrence of burrs, reduce the risk of short circuit, and improve operation safety. More cuts indicate a higher probability of occurrence of burrs. The burrs are likely to pierce the separator 3, resulting in short circuit between the first electrode plate 1 and the second electrode plate 2. A higher risk of short circuit indicates lower operation safety. In this application, the first laminate 11 and the second laminate 21 only need to be cut on three sides instead of four sides, cuts are reduced for both the first laminate 11 and the second laminate 21, thereby reducing the risk of short circuit and improving the operation safety.

As can be seen, the electrode assembly 201 formed in the "Z+U"-shape stacking manner provided in this application can not only effectively improve the production efficiency of the stacked batteries, but also effectively improve the operation safety of the stacked batteries.

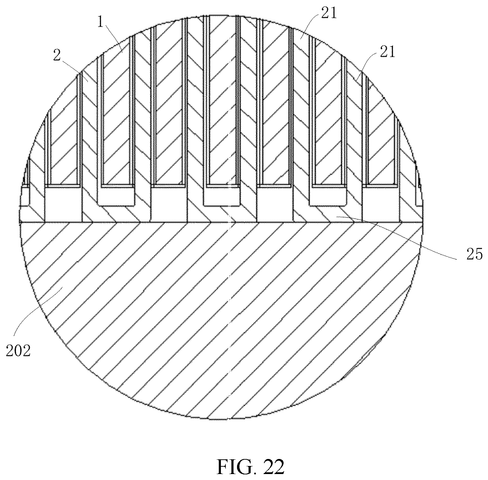

In addition, the "Z+U"-shape stacking manner used in this application further helps improve the heat dissipation performance of the battery cell 20. For example, referring to FIG. 22, in some embodiments, the tab 15 of the second electrode plate 2 is located at the end of the second electrode plate 2 farther away from the bending portion 25, and the bending portion 25 of the second electrode plate 2 is in contact with the inner wall of the housing 202.

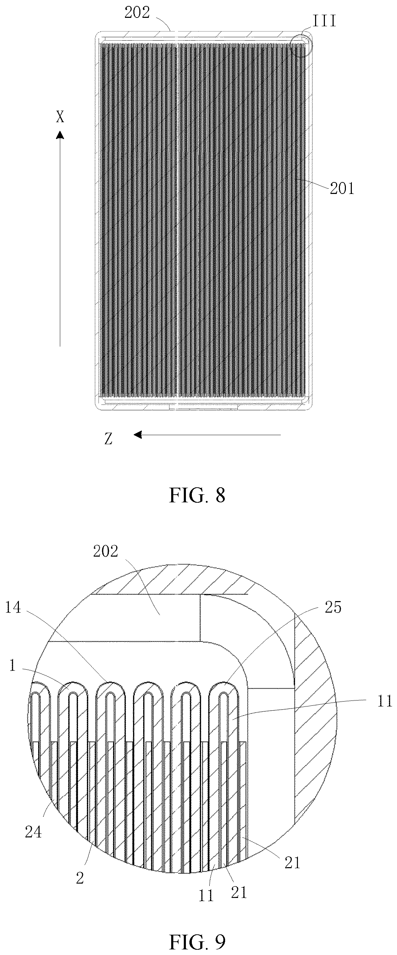

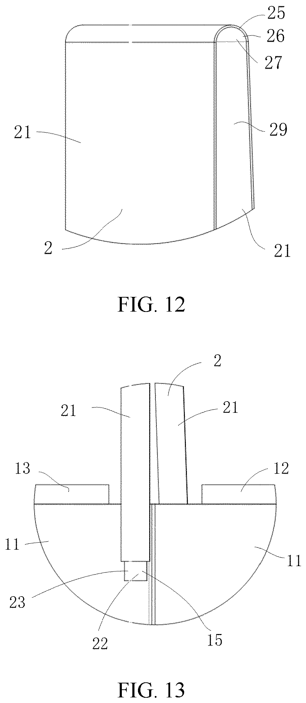

It can be understood that the bending portion 25 is the portion where the electrode plate is folded. Specifically, the bending portion 25 of the first electrode plate 1 is the portion where the first electrode plate 1 is folded, or the portion where two adjacent first laminates 11 are connected after the first electrode plate 1 is folded. The bending portion 25 of the second electrode plate 2 is the portion where the second electrode plate 2 is folded, or the portion where two adjacent second laminates 21 are connected after the second electrode plate 2 is folded. Referring to FIG. 9, in some embodiments, the bending portion 25 of the first electrode plate 1 is curved so that the entire first electrode plate 1 is substantially in an S shape. Referring to FIG. 12, in some embodiments, the bending portion 25 of the second electrode plate 2 is curved so that the entire second electrode plate 2 is substantially in an S shape.

In the related art, an insulation pallet is typically provided between the electrode plate and the housing 202 for accommodating the electrode assembly 201 to prevent direct contact therebetween, where the insulation pallet supports the electrode assembly 201 and is generally made of an insulating material such as a polymer material. In this case, the heat generated by the electrode assembly 201 is hard to be dissipated quickly but accumulates in the housing 202, which may easily cause safety accidents such as an explosion due to overheating.

Different from the related art, in the foregoing embodiments, no insulation pallet is provided between the electrode assembly 201 and the housing 202, and instead, the bending portion 25 of the second electrode plate 2, folded in half into a U shape, of the electrode assembly 201 comes in contact with the inner wall of the housing 202. The second electrode plate 2 is usually made of a thermally conductive material such as a metal material. The housing 202 for accommodating the electrode assembly 201 is also usually made of a thermally conductive material such as a metal material (for example, aluminum). In addition, a large quantity of second electrode plates 2 are provided and the bending portions 25 of all the second electrode plates 2 are in contact with the inner wall of the housing 202, so the area of contact is large. Therefore, contact between the bending portions 25 of the second electrode plates 2 and the inner wall of the housing 202 can implement a large area of direct contact (with high thermal conductivity) between the electrode assembly 201 and the housing 202 for heat dissipation. In this case, the heat generated by the electrode assembly 201 can be quickly dissipated outside of the housing 202, thereby improving the heat dissipation performance of the battery cell 20, reducing the risk of safety accidents caused by heat accumulation, and improving the operation safety.

In addition, in the foregoing embodiments, when the bending portion 25 of the second electrode plate 2 is in contact with the inner wall of the housing 202, the tab 15 of the second electrode plate 2 is provided at the end of the second electrode plate 2 farther away from the bending portion 25, so that the bending portion 25 of the second electrode plate 2 in contact with the housing 202 does not have the tab 15, and the tab 15 of the second electrode plate 2 is located on the opposite side of the bending portion 25. The advantage is that such bending portion 25 not provided with the tab 15 is easy in contact with the housing 202, and the contact between the bending portion 25 and the housing 202 does not affect the electrical connection between the tab 15 and the adapter 205 and the electrode terminal 206.

As can be seen, the tab 15 of the second electrode plate 2 is located at the end of the second electrode plate 2 farther away from the bending portion 25, and the bending portion 25 of the second electrode plate 2 in contact with the inner wall of the housing 202. In this case, heat dissipation between the electrode assembly 201 and the housing 202 can be implemented without affecting the electric energy transfer function of the second electrode plate 2, effectively improving the heat dissipation performance of the battery cell 20.

Referring to FIG. 22, in some embodiments, a surface, farther away from the first electrode plate 1, of the bending portion 25 of the second electrode plate 2 faces the direction of gravity. Based on this, the bending portion 25 of the second electrode plate 2 can be in full contact with the inner wall of the housing 202 under gravity, and heat can be transferred more efficiently, therefore helping further improve the heat dissipation performance of the battery cell 20.

As previously described, in this application, the first electrode plate 1 and the second electrode plate 2 are electrodes of opposite polarity. In some embodiments, the first electrode plate 1 is a positive electrode plate 24 and the second electrode plate 2 is a negative electrode plate 14. In other embodiments, the first electrode plate 1 is the negative electrode plate 14 and the second electrode plate 2 is the positive electrode plate 24. When the first electrode plate 1 and the second electrode plate 2 are the negative electrode plate 14 and the positive electrode plate 24 respectively, it is easy to design the first electrode plate 1 to be larger than the second electrode plate 2 in area because the first electrode plate 1 adopts the Z-folding manner and the second electrode plate 2 adopts the U-folding manner. In this way, the area of the negative electrode plate 14 is larger than that of the positive electrode plate 24. Therefore, the negative electrode plate 14 can have adequate space to receive lithium ions, helping prevent lithium precipitation.

Lithium precipitation refers to that the negative electrode plate does not have space for receiving lithium ions and therefore lithium ions precipitate on the surface of the negative electrode plate.

The charging and discharging process of lithium-ion batteries is a process of lithium ions intercalating into and deintercalating out of the positive and negative electrode plates, accompanied by absorption and release of energy. When a lithium-ion battery is being charged, lithium ions are generated on the positive electrode plate of the lithium battery, move through the electrolyte to the negative electrode plate, and then are combined with electrons and intercalate into the active substance of the negative electrode plate. More intercalated lithium ions mean a higher charging capacity. When the lithium-ion battery is being discharged, the lithium ions intercalated into the negative electrode plate deintercalate and move back to the positive electrode plate. More lithium ions moving back to the positive electrode plate mean a higher discharge capacity. However, if the negative electrode plate does not have space for receiving lithium ions, the lithium ions will precipitate on the surface of the negative electrode plate (that is, lithium precipitation occurs) to form lithium dendrites. Once the lithium dendrites pierce through the separator and have contact with the positive electrode plate, short circuit will be caused within the battery, resulting in fire or even an explosion accident. As can be seen, lithium precipitation affects the safety performance of lithium-ion batteries.

When the negative electrode plate 14 adopts the Z-folding manner and the positive electrode plate 24 adopts the U-folding manner, the area of the negative electrode plate 14 can be easily made to be larger than the area of the positive electrode plate 24. In this way, lithium precipitation is prevented, helping further improve the operation safety of stacked batteries.

In addition, during stacking, the folding directions of the first electrode plate 1 and the second electrode plate 2 may be perpendicular or parallel to each other. That is, the first direction X may be perpendicular or parallel to the second direction Y.

When the first direction X is perpendicular to the second direction Y, the folding direction of the first electrode plate 1 is perpendicular to that of the second electrode plate 2. In this case, the stacking manner can be referred to as an orthogonal "Z+U"-shape stacking manner. In the orthogonal "Z+U"-shape stacking manner, the second electrode plate 2 is folded in half and inserted into the folded first electrode plate 1. Then, on the one hand, the bending portion 25 of the second electrode plate 2 crosses over and wraps around an edge of the first electrode plate 1 adjacent to the bending portion 25. The bending portion 25 of the second electrode plate 2 can limit, to a certain extent, the position of the first electrode plate 1 in the folding direction (namely, the second direction Y) of the second electrode plate 2. On the other hand, the bending portion 25 of the first electrode plate 1 can wrap around an edge of the second electrode plate 2 adjacent to the bending portion 25 of the first electrode plate 1, and limits, to a certain extent, the position of the second electrode plate 2 in the folding direction (namely, the first direction X) of The First electrode plate 1. In addition, one second laminate 21 of the second electrode plate 2 is held between two adjacent first laminates 11 of the first electrode plate 1, further limiting, to a certain extent, the position of the second electrode plate 2 in a third direction Z (a stacking direction of first laminates 11) that is perpendicular to both the first direction X and the second direction Y. It can be seen that when the orthogonal "Z + U" stacking manner is used, the first electrode plate 1 and the second electrode plate 2 can be limited by each other in terms of position. In addition, the two can be limited each other in more directions, with a high limiting reliability.

When the first direction X is parallel to the second direction Y, the folding direction of the first electrode plate 1 is parallel to that of the second electrode plate 2. Such stacking manner can be referred to as a parallel "Z+U"-shape stacking manner. In the parallel "Z+U"-shape stacking manner, when the second electrode plate 2 is folded in half and inserted into the folded first electrode plate 1, the bending portion 25 of the second electrode plate 2 crosses over and wraps around the bending portion 25 of the first electrode plate 1, so that the position of the first electrode plate 1 can be limited to a certain extent in the folding direction (namely, the second direction Y) of the second electrode plate 2. In addition, one second laminate 21 of the second electrode plate 2 is held between two adjacent first laminates 11 of the first electrode plate 1, so that the position of the second electrode plate 2 can be limited to a certain extent in the stacking direction (namely, the third direction Z) of the first laminates 11. It can be seen that the first electrode plate 1 and the second electrode plate 2 can be limited each other in terms of position when the parallel "Z + U" stacking manner is used. In addition, such parallel "Z + U" stacking manner facilitates assembly.

It can be seen that when the "Z+U"-shape stacking manner is used, the first electrode plate 1 and the second electrode plate 2 can be mutually limited regardless of the orthogonal stacking manner with the first direction X being perpendicular to the second direction Y or the parallel stacking manner with the first direction X being parallel to the second direction Y. The mutual limitation between the first electrode plate 1 and the second electrode plate 2 helps improve the structural reliability of the electrode assembly 201 and control the area of the portion of the negative electrode plate beyond the positive electrode plate, thereby helping improve the safety performance of the stacked batteries.

The portion of the negative electrode plate beyond the positive electrode plate is also referred to as overhang, which is a concept proposed mainly for improving the safety performance of lithium-ion batteries.

As previously described, during charging of a lithium-ion battery, if the negative electrode plate does not have enough area for receiving lithium ions, lithium precipitates. In addition, if dendrites resulting from lithium precipitation pierce through the separator, short circuits may be caused on the battery cell, resulting in an explosion or fire. Therefore, in order that the negative electrode plate has enough area for receiving lithium ions, the negative electrode plate is generally designed with an excess area to improve the safety of the lithium-ion battery. That is, the area of the negative electrode plate is larger than the area of the positive electrode plate. In this case, the edge of the negative electrode plate typically exceeds the edge of the positive electrode plate, forming a portion of the negative electrode plate beyond the positive electrode plate.

As can be seen, the negative electrode plate exceeding the positive electrode plate by a portion is a dimensional difference design. Such design can implement physical isolation between the positive and negative electrodes, so as to avoid lithium dentrites resulting from lithium ions precipitation on the surface of the negative electrode plate, reducing the risk of short circuit between the positive and negative electrodes. Therefore, the safety performance of lithium-ion batteries can be effectively improved.

However, a challenge is present for designing the negative electrode plate to exceed the positive electrode plate by a portion. That is, the area of the portion of the negative electrode plate beyond the positive electrode plate is hard to control. Due to a large quantity of electrode plates, it is difficult to align the positive electrode plates on different layers and the negative electrode plates in different layers. The relative position between the positive and negative electrode plates tend to change due to reasons such as loose adhesion. Therefore, it is hard to control the portion of the negative electrode plate beyond the positive electrode plate. If the area of the portion of the negative electrode plate beyond the positive electrode plate cannot be effectively controlled, the area is likely to be excessively small or large, adversely affecting the battery performance. For example, if the area of the portion of the negative electrode plate beyond the positive electrode plate is excessively small, the portion is likely to be removed when the positive and negative electrode plates are misaligned, resulting in the failure of the short circuit prevention. For example, if the area of the portion of the negative electrode plate beyond the positive electrode plate is excessively large, the negative electrode plate needs to occupy too much space inside the lithium battery. This tends to cause a waste of space, resulting in low space utilization and affecting the increase of energy density.

It can be seen that how to effectively control the area of the portion of the negative electrode plate beyond the positive electrode plate is an important yet tricky problem.

In the "Z+U"-shape stacking manner proposed by this application, the bending portion 25 of the second electrode plate 2 can limit the position of the first electrode plate 1, so that the area of the portion of the negative electrode plate beyond the positive electrode plate can be easily controlled.

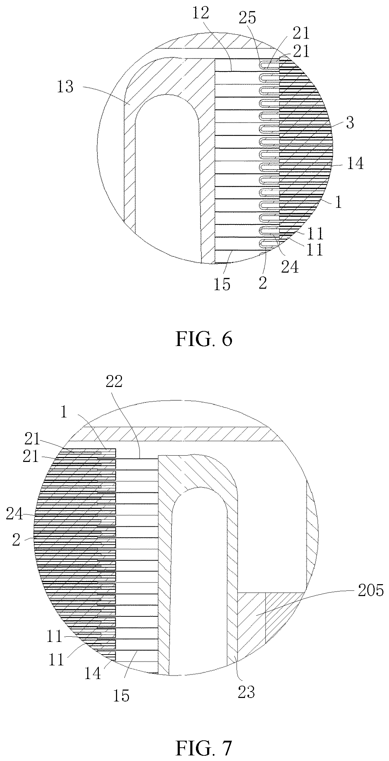

For example, referring to FIG. 6 and FIG. 12, in some embodiments, the first electrode plate 1 and the second electrode plate 2 are constructed as a negative electrode plate 14 and a positive electrode plate 24 respectively, . In addition, the second electrode plate 2 is constructed with an inert region 26, and the inert region 26 includes the bending portion 25 of the second electrode plate 2 and is not coated with an active substance 29. For example, a size (half of width of the inert region 26 in the unfolded state) of the inert region 26 in the second direction Y is 1 mm to 18 mm. For example, in some embodiments, the size of the inert region 26 in the second direction Y is 3 mm to 4 mm.

Not coated with the active substance 29, the inert region 26 on the second electrode plate 2 is an inactive region and does not participate in electrochemical reaction that takes place during charging and discharging. In this case, the portion of the first electrode plate 1 extending into the inert region 26 is the portion beyond the second electrode plate 2. In addition, because the first electrode plate 1 and the second electrode plate 2 are the negative electrode plate 14 and the positive electrode plate 24 respectively, the portion of the first electrode plate 1 extending into the inert region 26 is the portion of the negative electrode plate 14 beyond the positive electrode plate 24. Therefore, lithium precipitation does not occur. In this case, the area of the portion of the negative electrode plate beyond the positive electrode plate depends on the area of the inert region 26. In this way, only the area of an end, not coated with the active substance 29, of the bending portion 25 of the second electrode plate 2 needs to be controlled. In other words, only the area of the inert region 26 needs to be controlled, so as to effectively implement control of the area of the portion of the negative electrode plate beyond the positive electrode plate, which is simple but of high control accuracy. During actual assembly, the second electrode plate 2 with a finished inert region 26 is inserted into the first electrode plate 1, and then the area of the portion of the negative electrode plate 14 beyond the positive electrode plate 24 can be controlled. This conveniently implements accurate control of the area of the portion of the negative electrode plate beyond the positive electrode plate.

It should be noted that in FIG. 6, the blank area between the bending portion 25 of the second electrode plate 2 and the end of the first laminate 11 is actually filled with the separator 3, which is not shown in the figure. In other words, the second electrode plate 2 is inserted till the bottom when being inserted into the first electrode plate 1. The distance between the edge where the bending portion 25 of the second electrode plate 2 is located and the edge, of the first electrode plate 1, wrapped by the bending portion 25 of the second electrode plate 2 is substantially the thickness of the separator 3 or a multiple of the thickness of the separator 3.

In addition, the foregoing inert region 26 on the second electrode plate 2 not only facilitates control of the area of the portion of the negative electrode plate beyond the positive electrode plate, but also helps improve the reliability of insulation between the first electrode plate 1 and the second electrode plate 2. For example, referring to FIG. 12, in some embodiments, a surface, facing the first electrode plate 1, of the inert region 26 on the second electrode plate 2 is provided with an insulating substance 27. For example, the insulating substance 27 is a ceramic coating or an insulation glue (for example, an insulation paste or an insulation sticker).

No matter whether the second electrode plate 2 is the positive electrode plate 24 or the negative electrode plate 14, when the surface, facing the first electrode plate 1, of the inert region 26 on the second electrode plate 2 is provided with an insulating substance 27, the inert region 26 and the first electrode plate 1 can be insulated by both the separator 3 and the insulating substance 27, contributing to more reliable insulation between the first electrode plate 1 and the second electrode plate 2. This can reliably prevent short circuit accidents, thereby helping further improve the operation safety. Because no active substance 29 is provided in the inert region 26, the insulating substance 27 in the inert region 26 does not affect normal electrochemical reaction. As can be seen, when the insulating substance 27 is provided on the surface, facing the first electrode plate 1, of the inert region 26 on the second electrode plate 2, the insulation between the first electrode plate 1 and the second electrode plate 2 can be further improved without affecting the normal electrochemical reaction. This improves the operation safety more effectively.

In this application, tabs of the first electrode plate 1 and the second electrode plate 2 can be led out in a variety of manners.

For example, referring to FIG. 3 to FIG. 24, in some embodiments, the tab 15 of the first electrode plate 1 is located on an edge, other than the bending portion 25, of the first electrode plate 1. In this case, the tab 15 of the first electrode plate 1 is not located on the bending portion 25 of the first electrode plate 1, and is not easily damaged during folding. Therefore, this manner is more reliable as compared with the case that the tab 15 of the first electrode plate 1 is located on the bending portion 25 of the first electrode plate 1.

For another example, referring to FIG. 3 to FIG. 24, in some embodiments, the tab 15 of the second electrode plate 2 is located on an edge, other than the bending portion 25, of the second electrode plate 2. In this case, the tab 15 of the second electrode plate 2 is not located on the bending portion 25 of the second electrode plate 2, and is not easily damaged due to folding. Therefore, this manner is more reliable as compared with the case that the tab 15 of the second electrode plate 2 is located on the bending portion 25 of the second electrode plate 2. In addition, when the tab 15 of the second electrode plate 2 is located on the edge other than the bending portion 25, it is convenient to make the bending portion 25 of the second electrode plate 2 come in contact with the inner wall of the housing 202 for heat transfer. Also, when the tab 15 of the second electrode plate 2 is not located on the bending portion 25 of the second electrode plate 2, the bending portion 25 of the second electrode plate 2 can be easily used to limit the position of the first electrode plate 1. The tab 15 is typically long and pliable. If the tab 15 of the second electrode plate 2 is located on the bending portion 25, the bending portion 25 needs to be extended further and is also pliable. In this case, the bending portion 25 of the second electrode plate 2 can hardly limit the position of the first electrode plate 1 in an effective manner.

For another example, referring to FIG. 3 to FIG. 24, in some embodiments, the tabs 15 of the first electrode plate 1 and the second electrode plate 2 are both located on the edges other than the bending portion 25. In this case, the tabs of the first electrode plate 1 and the second electrode plate 2 are not easily damaged due to folding, improving the reliability.

Refer to FIG. 3 to FIG. 20 for an example of the tabs 15 of both the first electrode plate 1 and the second electrode plate 2 being located on edges other than the bending portion 25. The second direction Y is perpendicular to the first direction X. The tab 15 of the first electrode plate 1 is located on the edge of the first electrode plate 1 adjacent to the bending portion 25, and the tab 15 of the second electrode plate 2 is located at the end of the second electrode plate 2 farther away from the bending portion 25.

In this example, because the second direction Y is perpendicular to the first direction X, the first electrode plate 1 and the second electrode plate 2 adopt the "Z+U"-shape stacking manner. In addition, the tab 15 of the first electrode plate 1 is located on the edge of the first electrode plate 1 adjacent to the bending portion 25, and the tab 15 of the second electrode plate 2 is located at the end of the second electrode plate 2 farther away from the bending portion 25. Therefore, the extending direction (the tab leading-out direction) of the tabs 15 of the first electrode plate 1 and the second electrode plate 2 is parallel to the folding direction (namely, the second direction Y) of the second electrode plate 2. As can be seen, the first electrode plate 1 and the second electrode plate 2 of the electrode assembly 201 in this example adopt the "Z+U"-shape stacking manner, where the tabs are led out in the folding direction of the second electrode plate 2. In this case, the tabs of the first electrode plate and the second electrode plate can be led out on the same side or different sides in the second direction Y. Therefore, the battery cell can be designed with the positive and negative electrode terminals being provided on the same side or different sides

As a specific implementation of the foregoing example, refer to FIG. 3 to FIG. 13. In some embodiments, the second direction Y is perpendicular to the first direction X, only one of any two adjacent first laminates 11 has a tab 15, and the first laminate 11 not provided with a tab 15 is wrapped in the bending portion 25 of the second electrode plate 2. Based on this setting, tabs of the first electrode plate 1 are led out in a spaced-apart manner, that is, every other first laminate 11 provides a tab 15. In this case, the first laminate 11 without the tab 15 can reserve space for the tab 15 of the second electrode plate 2, and it is only necessary to make the tab leading-out direction of the first laminate 11 opposite the tab leading-out direction of the second electrode plate 2. That is, it is only necessary to lead out the tabs of the first electrode plate 1 and the second electrode plate 2 on opposite sides in the second direction Y, so that the positive and negative electrode tabs can be physically isolated to prevent short circuit of the positive and negative electrode tabs, which is easy to implement.

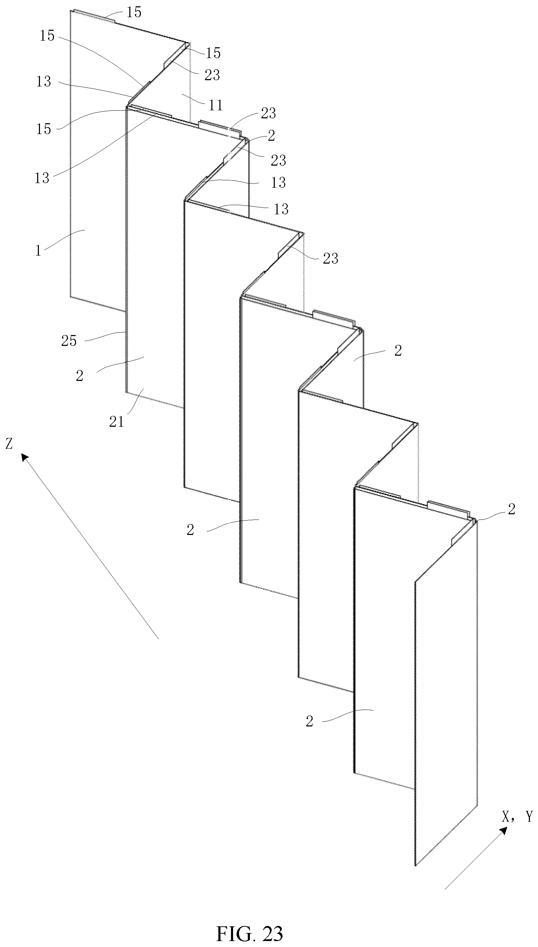

Refer to FIG. 23 to FIG. 24 for another example in which the tabs 15 of the first electrode plate 1 and the second electrode plate 2 are located on the edges other than the bending portion 25. The second direction Y is parallel to the first direction X. The tab 15 of the first electrode plate 1 is located on the edge of the first electrode plate 1 adjacent to the bending portion 25, and the tab 15 of the second electrode plate 2 is located at the end of the second electrode plate 2 adjacent to the bending portion 25.

In this example, the second direction Y is parallel to the first direction X. Therefore, the first electrode plate 1 and the second electrode plate 2 adopt the "Z+U"-shape stacking manner. In addition, the tab 15 of the first electrode plate 1 is located on the edge of the first electrode plate 1 adjacent to the bending portion 25, and the tab 15 of the second electrode plate 2 is located at the end of the second electrode plate 2 adjacent to the bending portion 25. Therefore, the leading-out directions of the tabs 15 of the first electrode plate 1 and the second electrode plate 2 are parallel to the folding direction (namely, the second direction Y, also the first direction X in this example) of the second electrode plate 2. As can be seen, the first electrode plate 1 and the second electrode plate 2 of the electrode assembly 201 in this example adopt the "Z+U"-shape stacking manner, where the tabs are led out in the folding direction of the second electrode plate 2. In this case, the tabs of the first electrode plate and the second electrode plate can be led out from the same side or different sides in a direction perpendicular to the second direction Y (same as the first direction X in this example) and the third direction Z. Therefore, the battery cell can be designed with the positive and negative electrode terminals being provided on the same side or different sides

As can be seen, in both the orthogonal "Z+U"-shape stacking manner and the parallel "Z+U"-shape stacking manner, the tab 15 of the first electrode plate 1 and the tab 15 of the second electrode plate 2 can be located on the same side or on opposite sides. That is, tabs of the first electrode plate 1 and the second electrode plate 2 can both be led out from the same side or opposite sides. Therefore, the battery cell can be designed with the positive and negative electrode terminals being provided on the same side or different sides.

When the tab 15 of the first electrode plate 1 and the tab 15 of the second electrode plate 2 are located on the same side, it is convenient to make the bending portion 25 of the second electrode plate 2 in contact with the inner wall of the housing 202 for heat transfer. In this case, the tab 15 of the first electrode plate 1 and the tab 15 of the second electrode plate 2 can be arranged in a staggered manner in the first direction X to prevent mutual interference between the positive and negative electrode tabs.

Referring to FIG. 6 to FIG. 32, in this application, at least one of the two second laminates 21 of the second electrode plate 2 is provided with a tab 15. That is, only one of the two second laminates 21 of the second electrode plate 2 has a tab 15, or the second laminates 21 of the second electrode plate 2 each have a tab 15. When only one of the two second laminates 21 of the second electrode plate 2 has the tab 15, because the two second laminates 21 are connected by the bending portion 25, the tab 15 can be shared by the two second laminates 21 to transmit electric energy. The second laminate 21 not provided with the tab 15 can transmit electric energy, through the bending portion 25, to the second laminate 21 with the tab 15, which then transmits electric energy outwards via the tab 15. Electric energy can be transmitted outwards only if the second electrode plate 2 provides one tab 15. In this case, the structure is simple. When the two second laminates 21 of the second electrode plate 2 each have a tab 15, the second electrode plate 2 can transmit electric energy outwards through the two tabs 15, improving the electric energy transfer efficiency. In addition, the tabs 15 of the two second laminates 21 can be used as backup for each other. When one tab 15 of the second laminate 21 fails, the second electrode plate 2 can still transmit electric energy properly through the tab 15 of the other second laminate 21. Therefore, this can further effectively improve the operating reliability of the second electrode plate 2, the electrode assembly 201, the battery cell 20, the battery 10 and the electric apparatus 100.

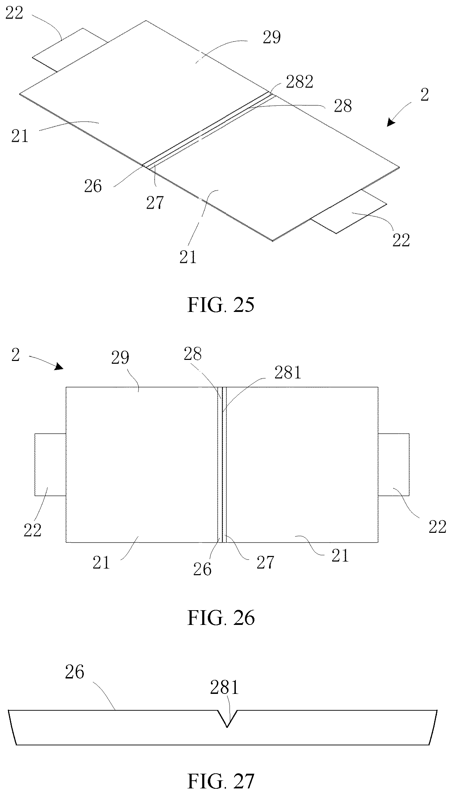

In the foregoing embodiments, both the first electrode plate 1 and the second electrode plate 2 need to be folded before being assembled. To facilitate the folding of the first electrode plate 1 and/or the second electrode plate 2, referring to FIG. 25 to FIG. 3, in some embodiments, the first electrode plate 1 and/or the second electrode plate 2 are provided with a fold guiding portion 28 to guide the folding of the first electrode plate 1 and/or the second electrode plate 2.

Under the guidance of the fold guiding portion 28, the first electrode plate 1 and/or the second electrode plate 2 can be folded more easily, helping further improve the production efficiency of the stacked batteries.

The fold guiding portion 28 may come with various types of structures. For example, referring to FIG. 25 to FIG. 32, in some embodiments, the fold guiding portion 28 includes an indentation 281 or a crease 282. Either of the indentations 281 and the creases 282 can effectively guide the folding, so that the first electrode plate 1 and/or the second electrode plate 2 can be quickly folded along the indentation 281 or crease 282, nearly without a deviation. It can be understood that the indentation 281 is an engraved trace recessed from the engraved surface, and is a weak portion with a certain depth. The crease 282 is a folded mark, rather than a recess down into the surface.

Also, the fold guiding portion 28 may be in various shapes. For example, referring to FIG. 25 to FIG. 32, in some embodiments, the fold guiding portion 28 is in the form of a solid line or an interrupted line.

When the fold guiding portion 28 is in the form of a solid line, the structure of the fold guiding portion 28 is simple and easy to manufacture. For example, the fold guiding portion 28 is in the form of a continuous straight line or a continuous curve.

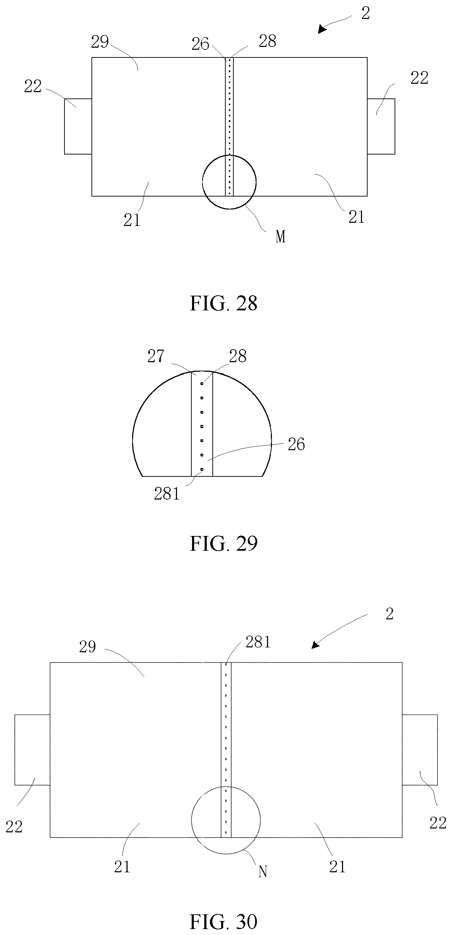

When the fold guiding portion 28 is in the form of an interrupted line, an area occupied by the fold guiding portion 28 is small, helping maximize the structural strength of the electrode plates while facilitating the folding of the electrode plates. For example, the fold guiding portion 28 is in the form of a broken line. For example, referring to FIG. 28 to FIG. 31, in some embodiments, the fold guiding portion 28 is in the form of a dotted line or a dashed line. Compared with other types of interrupted lines, the broken lines, especially the dotted line and the dashed line, are easier to manufacture.

The fold guiding portion 28 in the foregoing embodiments may be parallel to a width direction of the first electrode plate 1 and/or the second electrode plate 2, or is tilted with respect to the width direction of the first electrode plate 1 and/or the second electrode plate 2. It can be understood that the width direction of the first electrode plate 1 and/or the second electrode plate 2 is an extending direction of a shorter side on the surface, perpendicular to the thickness direction, of the first laminate 11 and/or the second laminate 21, or is referred to as a traverse direction of the first electrode plate 1 and/or the second electrode plate 2, being perpendicular to a longitudinal direction of the first electrode plate 1 and/or the second electrode plate 2. The longitudinal direction of the first electrode plate 1 and/or the second electrode plate 2 is an extending direction of a longer side on the surface, perpendicular to the thickness direction, of the first laminate 11 and/or the second laminate 21. The width direction of the first electrode plate 1 is also an extending direction of two edges of the first laminate 11 adjacent to the bending portion 25. The width direction of the second electrode plate 2 is also a direction, in which two edges of the second laminate 21 adjacent to the bending portion 25 are arranged oppositely.

Referring to FIG. 25 to FIG. 31, the fold guiding portion 28 is easier to manufacture when the fold guiding portion 28 is parallel to the width direction of the electrode plate thereon.

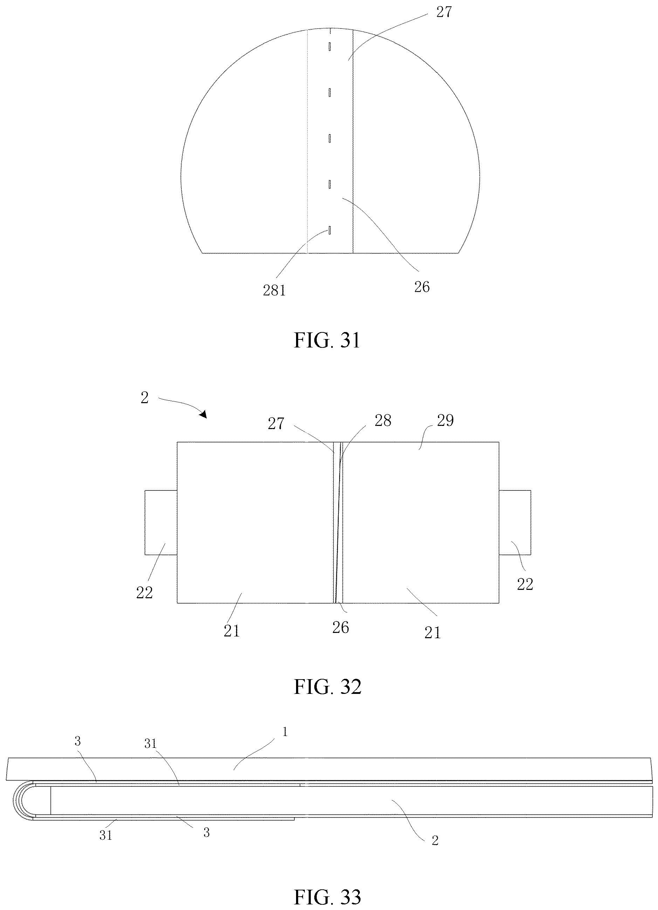

Refer to FIG. 32. When the fold guiding portion 28 is tilted with respect to the width direction of the electrode plate thereon, the fold guiding portion 28 deflects by an angle and can guide the electrode plate thereon to fold with a deflection, so that two adjacent laminates obtained after the folding are staggered in the width direction. When such deflected fold guiding portion 28 is provided on the second electrode plate 2 serving as the positive electrode plate 24, the two second laminates 21 of the positive electrode plate 24 can be staggered in the width direction. On the one hand, the second electrode plate 2 can be easily inserted into the first electrode plate 1 because the two second laminates 21 are not exactly aligned for fitting. On the other hand, after the second electrode plate 2 is inserted into the first electrode plate 1, the position with respect to the first electrode plate 1 can be easily controlled, so that the two second laminates 21 of the positive electrode plate 24 are located as far as possible from the discontinuous end of the negative electrode plate 14 but as close as possible to the continuous end of the negative electrode plate 14. That is, the two second laminates 21 of the positive electrode plate 24 are located as close as possible to the bending portion 25 of the negative electrode plate 14 but as far as possible from the open end of the negative electrode plate 14. In this way, the positive electrode plate 24 is unlikely to exceed the negative electrode plate 14 in the width direction. This helps prevent lithium precipitation caused by the positive electrode plate 24 extending the negative electrode plate 14 in the width direction, thereby helping further improve the operation safety.

As previously mentioned, the separator 3 is provided between the first electrode plate 1 and the second electrode plate 2, in order to separate the first electrode plate 1 from the second electrode plate 2 and therefore prevent short circuit between the first electrode plate 1 and the second electrode plate 2. However, during actual operation, the separator 3 may be punctured by a foreign object (such as an edge burr formed during electrode plate cutting or a detached edge dressing fragment, and dendrite grown during the charging process), and short circuit is caused. For example, during charging, lithium ions deintercalate from the positive electrode plate 24 and intercalate into the negative electrode plate 14, and the negative electrode plate 14 will swell after absorbing the lithium ions. Meanwhile, the positive electrode plate 24 will also swell after lithium ions deintercalate. Therefore, the separator 3 is pressed by the swelled positive and negative electrode plates during charging. In this case, a foreign object on the positive and negative electrode plates may tend to pierce through the separator, causing short circuit and a safety accident.

To further improve safety, refer to FIG. 33. In some embodiments, two separators 3 located in the thickness direction on opposite sides of one second electrode plate 2 are folded and wrap an edge of the second electrode plate 2 not provided with a tab 15.

In the related art, the separator 3 is located between the surfaces, perpendicular to the thickness direction, of two adjacent electrode plates but does not wrap the edge of the electrode plate. In this case, short circuit is easily caused by foreign objects on the edges of the electrode plates. In this embodiment of this application, the separator 3 wraps the edge of the second electrode plate 2, and prevents a foreign object on the edge from electrically conducting the positive and negative electrodes, thereby reducing the risk of short circuit caused by foreign objects on the edge.

Furthermore, in this embodiment of this application, instead of one separator 3 wrapping the edge of the second electrode plate 2, two separators 3 are located on both sides, in the thickness direction, of the second electrode plate 2 and wrap the edge of the second electrode plate 2. Even if a foreign object on the edge of the first electrode plate 1 and/or the second electrode plate 2 pierces through one layer of the separator 3 wrapping the edge, the other layer of separator 3 wrapping the edge can still prevent the foreign object. Therefore, short circuit can be reliably avoided, improving the safety performance more effectively.

In addition, because the separator 3, used to wrap the edge of the electrode plates, is an original component of the battery cell 20, there is no need to add other structural member for wrapping the edge of the electrode plate. Therefore, the structure is simple. More importantly, if another structural member is used to wrap the edge of the electrode plate, such structural component tends to affect proper transport of lithium ions and hinder the transport of lithium ions in the wrapped region, causing loss of overall capacity of the electrode assembly 201 and the battery cell 20. In addition, when another structural member wraps around the edge of the positive electrode plate, lithium on the edge of the wrapped region can still be deintercalated as usual. In this case, the corresponding region on the negative electrode plate is prone to lithium accumulation, leading to safety risks. In this application, the separator 3 is used to wrap the edge of the electrode plate. Such problem can be effectively solved because the separator 3 does not prevent transport of lithium ions. Therefore, the loss of overall capacity of electrode assembly 201 and battery cell 20 can be avoided and the risk of lithium accumulation will not be increased. On the contrary, when the separator 3 is used to wrap the edge of positive electrode plate 24, transport of lithium ions in the wrapped region on the edge of the positive electrode plate 24 can be controlled, and then the amount of lithium ions in the edge region is reduced, helping reduce the risk of lithium precipitation on the edge.

Furthermore, in this application, the first electrode plate 1 adopts the Z-folding manner and the second electrode plate 2 adopts the U-folding manner. Therefore, it is easier to wrap the edge of the second electrode plate 2 with the separator 3 than to wrap the edge of the first electrode plate 1 with the separator 3.

In addition, the edge of the second electrode plate 2 wrapped in the two separators 3 is an edge of the second electrode plate 2 not provided with the tab 15, so the tab of the second electrode plate 2 can still be led out as usual.

As can be seen, when two separators 3 located in the thickness direction on opposite sides of one second electrode plate 2 are folded and wrap the edge of the second electrode plate 2 not provided with the tab 15, the structure is simple, neither affecting the overall capacity nor increasing risk of lithium precipitation. In this case, short circuit accidents caused by foreign objects on the edge can be prevented more reliably, thereby effectively improving the safety performance.

When two separators 3 are used to wrap the edge of the second electrode plate 2, all edges of the second electrode plate 2 not provided with the tab 15 can be wrapped, so that all the edges of the second electrode plate 2 other than the edge where the tab 15 is located can be wrapped with a flange 31 formed by two layers of separator 3. In this way, all unoccupied edges of the second laminates 21 are fully wrapped, further improving the safety performance.

During compounding of the separators 3 and the second electrode plate 2, the separators 3 can be compounded onto the second electrode plate 2 by hot pressing, bonding, or other means, in order to secure the wrapping. Moreover, a degree of lithium ion intercalation and deintercalation on edges of the electrode plates can be controlled by adjusting the hot pressing or bonding process.

To facilitate folding of the second electrode plate 2, in some embodiments, the separator 3 wraps the edge of the second electrode plate 2 not provided with the tab 15 before the second electrode plate 2 is folded.

The following further describes the examples shown in FIG. 3 to FIG. 33.

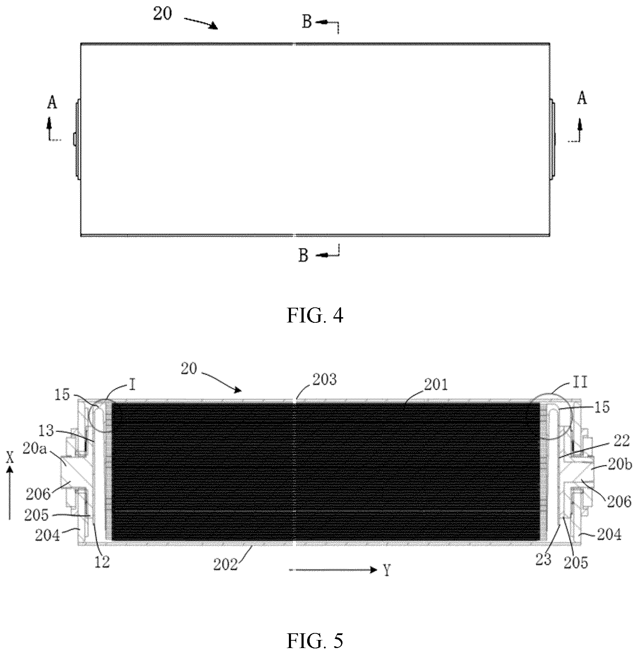

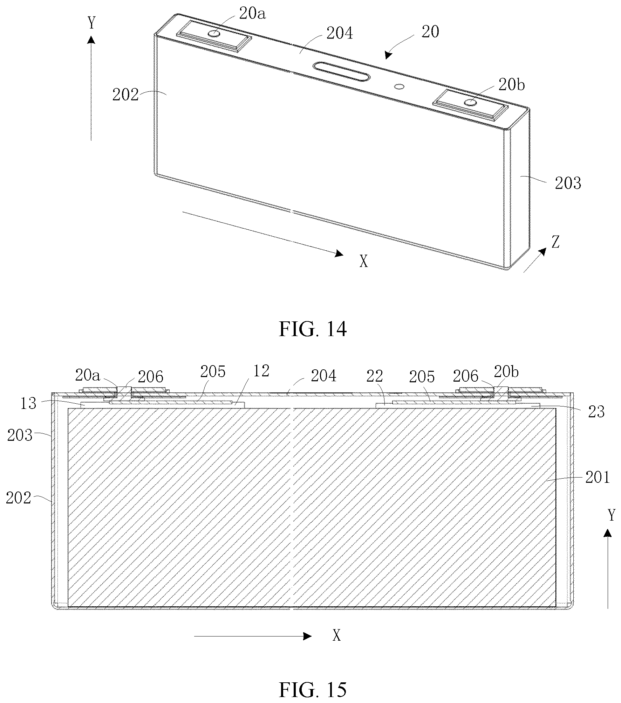

For ease of description and understanding, up, down, left, and right directions used in FIG. 5 will be applied to the following description. The four directions used in FIG. 5 are consistent with those used in FIG. 14, and also conform to the relationship between orientations and positions of the battery cell 20 and the battery 10 after being installed on a vehicle. Up indicates a direction opposite the direction of gravity, and down indicates the direction of gravity.

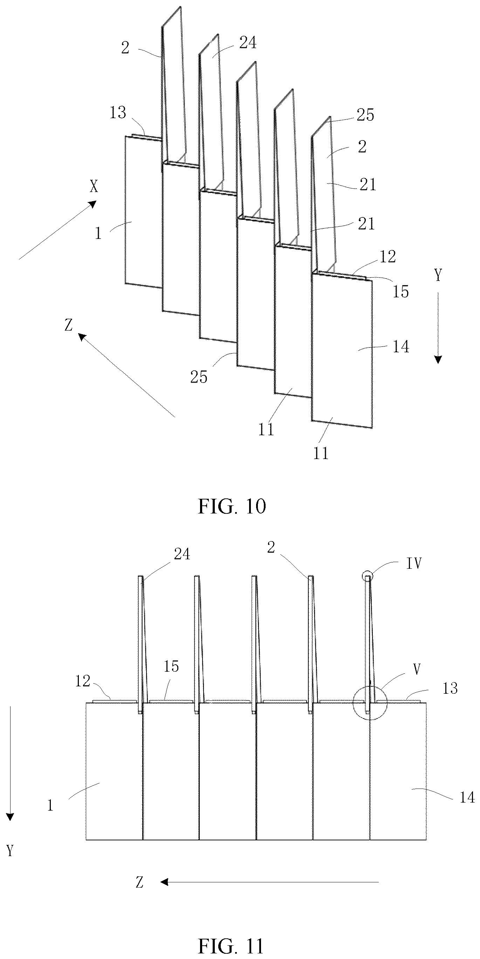

Also, it should be noted that for the purpose of clearly illustrating the relationship between the first electrode plate 1 and the second electrode plate 2, the separator 3 is not shown in some of the accompanying drawings, such as FIG. 10 to FIG. 12, FIG. 17, FIG. 18, FIG. 23, and FIG. 24.

The following description begins with the first embodiment shown in FIG. 3 to FIG. 13.

As shown in FIG. 3 to FIG. 13, in the first embodiment, the battery cell 20 is a prismatic stacked battery and transmits electric energy outwards from opposite sides.

As shown in FIG. 3 to FIG. 7, in the first embodiment, the housing 202 of the battery cell 20 is square in shape, and the left and right ends of the housing body 203 are each provided with an end cap 204. The two end caps 204 are removably attached to the left and right ends of the housing body 203, so that a closed space can be formed inside the housing 202 for accommodating the electrode assembly 201, electrolyte, and others.

Both the end caps 204 are provided with electrode terminals 206 so that the two electrode terminals 206 of the battery cell 20 are located on the left and right sides of the housing 202. Specifically, as shown in FIG. 5, the negative electrode terminal 20a is provided on the left end cap 204 and the positive electrode terminal 20b is provided on the right end cap 204.

In order to implement electrical connection with the two electrode terminals 206 on the left and right sides, in this embodiment, the tab 15 of the electrode assembly 201 is provided on the left and right sides of the electrode assembly 201, as shown in FIG. 5. Specifically, according to FIG. 5 and FIG. 6, the negative electrode tab 13 is provided on the left side of the electrode assembly 201 and is electrically connected to the negative electrode terminal 20a on the left side through the adapter 205 on the left side. According to FIG. 5 and FIG. 7, the positive electrode tab 23 is provided on the right side of the electrode assembly 201 and is electrically connected to the positive electrode terminal 20b on the right side through the adapter 205 on the right side. In this way, the electric energy generated by the electrode assembly 201 can be transmitted outwards from the left and right sides.

FIG. 5 to FIG. 13 illustrate the structure and stacking process of the electrode assembly 201 in this embodiment.

As shown in FIG. 5 to FIG. 13, in this embodiment, the electrode assembly 201 includes the first electrode plate 1, the second electrode plate 2, and the separator 3. The first electrode plate 1, the second electrode plate 2, and the separator 3 are stacked alternately to form the electrode assembly 201. Such electrode assembly 201 is also commonly referred to as a jelly roll.

As shown in FIG. 5 to FIG. 13, in this embodiment, the first electrode plate 1 and the second electrode plate 2 are the negative electrode plate 14 and the positive electrode plate 24 respectively. In this case, the active substance 29 coated on the surface of the first electrode plate 1 is a positive electrode active substance, such as one or more selected from a group consisting of lithium cobaltate (LiCoO₂), lithium manganate, lithium iron phosphate, and nickel cobalt manganese metal oxide (NCM), a current collector of the first electrode plate 1 for carrying the active substance 29 is a positive electrode current collector such as aluminum foil, and the tab 15 of the first electrode plate 1 is the negative electrode tab 13. In addition, the active substance 29 coated on the surface of the second electrode plate 2 is a negative electrode active substance such as graphite, a current collector of the second electrode plate 2 for carrying the active substance 29 is a negative electrode current collector such as copper foil, and the tab 15 of the second electrode plate 2 is the positive electrode tab 23.

As shown in FIG. 5 to FIG. 13, in this embodiment, the first electrode plate 1 adopts the Z-folding manner and the second electrode plate 2 adopts the U-folding manner, and the first electrode plate 1 is folded in the up-down direction (namely, the first direction X) and the second electrode plate 2 is folded in half in the left-right direction (namely, the second direction Y), so that the first direction X is orthogonal to the second direction Y and the orthogonal "Z+U"-shape stacking is implemented. The first electrode plate 1 is folded into a Z shape to form a plurality of first laminates 11 connected through the bending portion 25. The second electrode plate 2 is folded into a U shape to form two second laminates 21 connected through the bending portion 25. A plurality of folded second electrode plates 2 are inserted into the first electrode plate 1 so that the first laminates 11 and the second laminates 21 are alternately stacked in sequence in the third direction Z. The third direction Z is the same as the thickness direction of each laminate. Specifically, in this embodiment, the third direction Z is perpendicular to the first direction X and the second direction Y

As shown in FIG. 5 to FIG. 13, in this embodiment, tabs of the first electrode plates 1, which are constructed as the negative electrode plates 14, are led out in a spaced-apart manner. That is, one tab 15 is provided on every other first laminate 11 among the first laminates 11 of the first electrode plate 1. Between two adjacent first laminates 11, only one first laminate 11 has a tab 15. In addition, referring to FIG. 5, FIG. 6, FIG. 10, and FIG. 11, in this embodiment, the first laminate 11 with a tab 15 provides the tab only on one side of the second direction Y, so that the first electrode plate 1 provides a tab only on one side of the second direction Y. In this case, the tab of the first electrode plate 1 is let out from one side. Specifically, as shown in FIG. 5 and FIG. 6, the tabs 15 of the first electrode plate 1 are all located at the left end of the first electrode plate 1. To be precise, each tab 15 of the first electrode plate 1 is located at the left edge of each first laminate 11. Referring to FIG. 6 and FIG. 10, in this embodiment, the left edge of the first laminate 11 is the edge of the first laminate 11 adjacent to the bending portion 25 of the first electrode plate 1. Therefore, in this embodiment, the tabs 15 of the first electrode plate 1 are located on the edges of the first electrode plate 1 adjacent to the bending portion 25. Because the first electrode plate 1 of this embodiment is a negative electrode plate 14, the tab 15 of the first electrode plate 1 is a negative electrode tab 13. The tab 15 of the first electrode plate 1 is provided on the left side, allowing the negative electrode tab 13 to be electrically connected to the negative electrode terminal 20a on the left side of the battery cell 20.

Still referring to FIG. 5 to FIG. 13, in this embodiment, the second electrode plate 2 is constructed as the positive electrode plate 24, only one of two second laminates 21 has a tab 15, and the tab 15 is located at the end of the second laminate 21 farther away from the bending portion 25 of the second electrode plate 2. In this case, because the two second laminates 21 are connected through the bending portion 25, electric energy can still be transmitted outwards even if the second electrode plates 2 each have a tab 15. Moreover, referring to FIG. 5 to FIG. 7, in this embodiment, the bending portions 25 of all the second electrode plates 2 face to the left and wrap the left edges, not provided with a tab 15, of the first laminates 11 of the first electrode plate 1. In addition, the tabs 15 of all the second electrode plates 2 are located at the right end of the second electrode plates 2. That is, the tab 15 of each second laminate 21 is located on the right edge of the second laminate 21. Because the second electrode plate 2 of this embodiment is the positive electrode plate 24, the tab 15 of the second electrode plate 2 is a positive electrode tab 23. The tab 15 of the second electrode plate 2 is provided on the right side, allowing the positive electrode tab 23 to be electrically connected to the negative electrode terminal 20b on the right side.

In this embodiment, one tab is led out from one side for every two first electrode plates 1, while one tab is led out from one side for each second electrode plate 2. The tab leading-out directions of the first electrode plate 1 and the second electrode plate 2 are opposite, on opposite sides (left side and right side) of the second direction Y. Therefore, the positive and negative electrode tabs do not interfere with each other, and can be electrically connected to the positive and negative electrode terminals on the left and right sides respectively. In this way, the battery cell can be designed with electrode terminals being provided on left and right sides. Certainly, referring to FIG. 7, in this embodiment, the two second laminates 21 of the second electrode plate 2 may each have a tab 15. In this embodiment, the first electrode plate 1 does not provide a tab on the side where the second electrode plate 2 provides a tab, and therefore interference with the tab of the first electrode plate 1 will not be caused even if the two second laminates 21 of the second electrode plate 2 each provide a tab. When the two second laminates 21 of the second electrode plate 2 are each provided with a tab 15, improving the electricity conducting efficiency and reliability.

Referring to FIG. 6, FIG 11, and FIG. 12, in this embodiment, the bending portion 25 of the second electrode plate 2, as well as part of a flat section near the ends of the bending portion 25 are constructed as the inert region 26. The surface of the inert region 26 facing the first electrode plate 1 is not coated with the active substance 29 but is insulated with an insulating substance 27 such as ceramic coating, paste, or sticker.

In this embodiment, the second electrode plate 2 is the positive electrode plate 24, so the bending portion 25 of the second electrode plate 2 wrapping the first electrode plate 1, together with the nearby area is constructed as the inert region 26. In this way, the inert region 26 does not generate lithium ions, and therefore the portion of the first laminate 11 that extends into the inert region 26 becomes the portion of the negative electrode plate 14 beyond the positive electrode plate 24. This can thoroughly solve the problem of lithium precipitation caused by the bending portion 25 of the second electrode plate 2 exceeding the first electrode plate 1, thereby effectively improving the operation safety. Moreover, only the area of the inert region 26 needs to be controlled, that is, the area of the portion of the negative electrode plate beyond the positive electrode plate can be effectively controlled. This is simple and can skillfully solve the problem that the area of the portion of the negative electrode beyond the positive electrode is difficult to control.

The inert region 26 is further provided with the insulating substance 27. This can enhance the insulation between the positive and negative electrode plates and reliably prevent short circuit between the positive and negative electrode plates, thereby effectively improving the safety performance.

As shown in FIG. 10 and FIG. 11, in this embodiment, assembly of the electrode assembly 201 only needs the following steps to be performed: fold the first electrode plate 1 back and forth in the first direction X, fold in half a plurality of second electrode plates 2, and then insert the plurality of folded second electrode plates 2, from the side of the first electrode plate 1 adjacent to the bending portion 25 and not provided with the tab 15, into the first laminate 11 of the first electrode plate 1 not provided with the tab 15. Orthogonal stacking of the first electrode plate 1 and the second electrode plate 2 is completed. The stacking process is simple, and the previous cutting process is also simple. Therefore, the production efficiency of the electrode assembly 201, the battery cell 20, the battery 10, and the electric apparatus 100 can be effectively improved. This is of great significance to the promotion and application of the stacked batteries.

After each second electrode plate 2 is folded, two second laminates 21 are not completely fitted but opened at a certain angle, so that the second electrode plate 2 can be easily inserted into the first electrode plate 1.

The second embodiment shown in FIG. 14 to FIG. 22 is described below. For ease of description, the following describes only the difference between the first embodiment and the second embodiment. For those not described below, refer to the first embodiment.

As shown in FIG. 14 to FIG. 22, in the second embodiment, the battery cell 20 is still a prismatic stacked battery, and the electrode assembly 201 thereof still adopts the orthogonal "Z+U"-shape stacking manner, but tabs and electrode terminals are provided on the top side instead of the left and right sides.

Specifically, referring to FIG. 14 and FIG. 15, in this embodiment, the housing 202 is provided with only one end cap 204, which is removably attached to the top of the housing body 203. Two electrode terminals 206, namely a negative electrode terminal 20a and a positive electrode terminal 20b, are both provided on the end cap 204 on the top, and extend upwards out of the housing 202 from the end cap 204 on the top. Specifically, the negative electrode terminal 20a is located at the leftward portion of the end cap 204 and the positive electrode terminal 20b is located at the rightward portion of the end cap 204.

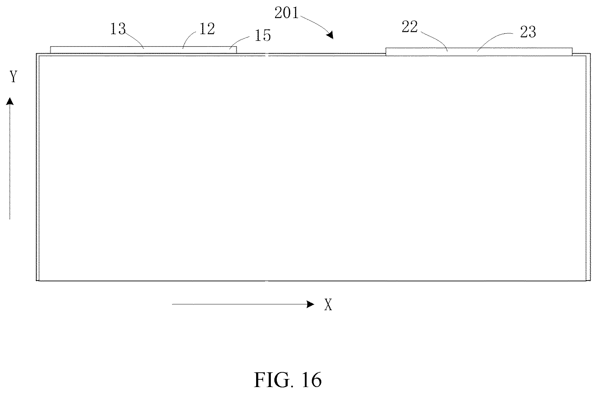

In addition, as shown in FIG. 16 to FIG. 20, in this embodiment, the first electrode plate 1 is folded in the left-right direction (namely, a first direction X) into a Z shape, and the second electrode plate 2 is folded upwards (namely, a second direction Y) in half into a U shape. In this way, the first direction X is orthogonal to the second direction Y and the orthogonal "Z+U"-shape stacking is implemented. A plurality of first laminates 11, formed by folding the first electrode plate 1, and a plurality of second laminates 21, formed by folding all the second electrode plates 2, are alternately stacked in sequence in a third direction Z. The third direction Z is the same as the thickness direction of each laminate, and is perpendicular to the first direction X and the second direction Y in this embodiment.

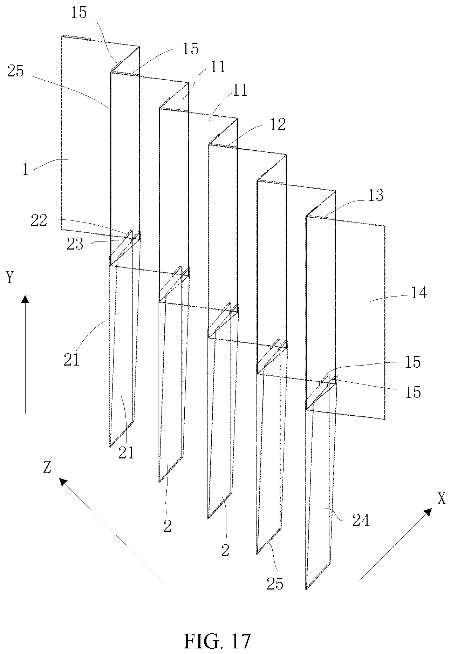

Referring to FIG. 16 to FIG. 20, in this embodiment, the first electrode plate 1 is constructed as a negative electrode plate 14, of which tabs are provided continuously on a single side instead of being provided on one side in a spaced-apart manner. Specifically, each of the first laminates 11 of the first electrode plate 1 is provided with a tab 15, and each tab 15 of the first electrode plate 1 is located at the top edge of the corresponding first laminate 11. Because the first electrode plate 1 of this embodiment is a negative electrode plate 14, the tab 15 of the first electrode plate 1 is a negative electrode tab 13. The tab 15 of the first electrode plate 1 is provided on the top edge of the first electrode plate 1, allowing the negative electrode tab 13 to be electrically connected to the negative electrode terminal 20a on the top of the battery cell 20. As shown in FIG. 17, in this embodiment, the top edge of the first laminate 11 is the edge of the first laminate 11 adjacent to the bending portion 25 of the first electrode plate 1. Therefore, in this embodiment, the tabs 15 of the first electrode plate 1 are located on the edges of the first electrode plate 1 adjacent to the bending portion 25.

Still referring to FIG. 16 to FIG. 20, in this embodiment, the second electrode plate 2 is constructed as a positive electrode plate 24, of which tabs are provided on two laminates on one side instead of being provided on a single laminate on one side. In other words, two second laminates 21 of the second electrode plate 2 are each provided with a tab 15, and the tabs 15 are located at the end of the second laminate 21 farther away from the bending portion 25 of the second electrode plate 2. In this embodiment, because the second electrode plate 2 is folded upwards, the bending portion 25 of the second electrode plate 2 faces downwards, and the end of the second electrode plate 2 farther away from the bending portion 25 of the second electrode plate 2 is the top edge of the second laminate 21. Therefore, in this embodiment, each tab 15 of the second electrode plate 2 is located at the top edge of the second electrode plate 2. In this embodiment, because the second electrode plate 2 is a positive electrode plate 24, the tab 15 of the second electrode plate 2 is a positive electrode tab 23. The tab 15 of the second electrode plate 2 is provided on the top edge of the second electrode plate 2, allowing the positive electrode tab 23 to be electrically connected to the negative electrode terminal 20b on the top of the battery cell 20.

In this embodiment, the tabs 15 of both the first electrode plate 1 and the second electrode plate 2 are located at the top. Therefore, the tabs 15 of the first electrode plate 1 and the tabs 15 of the second electrode plate 2 are located on the same side of the first direction X. In this case, the positive and negative electrode tabs need to be prevented from mutual interference. As shown in FIG. 17, in this embodiment, the tabs 15 of the first electrode plate 1 and the tabs 15 of the second electrode plate 2 are arranged in a staggered manner in the folding direction (namely, the first direction X) of the first electrode plate 1. Specifically, refer to FIG. 17. In this embodiment, a tab 15 is provided on an edge close to only one of any two adjacent bending portions 25 of the first electrode plate 1, but not provided on an edge close to the other bending portion 25. All tabs 15 of the first electrode plate 1 are arranged close to the bending portion 25 of the first electrode plate 1, while all tabs 15 of the second electrode plate 2 are arranged away from the bending portion 25 of the first electrode plate 1. In this way, the tabs 15 of the first electrode plate 1 and the tabs 15 of the second electrode plate 2 are completely staggered in the first direction X without an overlap, so that mutual interference between the positive and negative electrode tabs can be effectively prevented when the positive and negative electrode tabs are arranged on the same side.

The positive and negative electrode tabs are arranged in a staggered manner in the first direction X and the first direction X is the left-right direction. Therefore, as shown in FIG. 15 and FIG. 16, the positive and negative electrode tabs can be staggered in the left-right direction, so that all negative electrode tabs 13 are located on the top left and all positive electrode tabs 23 are located on the top right, allowing the positive and negative electrode tabs to be electrically connected to the negative electrode terminal 20a on the top left and the positive electrode terminal 20b on the top right respectively. In this way, the battery cell can be designed with the electrode terminals being provided on the top.

As previously mentioned, in this embodiment, the bending portions 25 of all the second electrode plates 2 face downwards. In this case, in order to improve the heat dissipation performance of the electrode assembly 201 and the battery cell 20, referring to FIG. 22, in this embodiment, the bending portions 25 of all the second electrode plates are in contact with an inner surface of a bottom wall of the housing 202. In this embodiment, the second electrode plate 2 is vertically arranged, the orientation of the bending portion 25 of the second electrode plate 2 is the direction of gravity. Specifically, a surface, farther away from the first electrode plate 1, of the bending portion 25 of the second electrode plate 2 faces the direction of gravity. Therefore, after the electrode assembly 201 is loaded into the housing 202, the second electrode plate 2 can sink spontaneously under gravity, enabling natural contact between the bending portion 25 of the second electrode plate 2 and the inner surface of the bottom wall of the housing 202. After being in contact with the bottom wall of the housing 202, the bending portion 25 of the electrode plate 2 can be deformed under pressure, so that the surface of the bending portion 25 back away from the first electrode plate 1 changes from an arc to a substantially rectangular shape, thereby allowing the bending portion 25 of the second electrode plate 2 to be in full contact with the bottom wall of the housing 202.

The bending portion 25 of the second electrode plate 2 and the housing 202 are made of metal material with good thermal conductivity, and the area of contact between the bending portions 25 of all the second electrode plates 2 of the electrode assembly 201 and the bottom wall of the housing 202 is as large as roughly half the area of the inner surface of the bottom wall of the housing 202. Therefore, in this embodiment, the electrode assembly 201 can be in full contact with the housing 202 for heat transfer, so that the heat generated by the electrode assembly 201 is quickly dissipated outside of the housing 202, improving the operation safety.

In the second embodiment, the second electrode plate 2 is also provided with an inert region 26 including a bending portion 25, and the inert region 26 is also provided with an insulating substance 27 for further insulation in order to prevent lithium precipitation. In addition, the area of the portion of the negative electrode plate beyond the positive electrode plate is effectively controlled to improve safety. Refer to the relevant description in the first embodiment. Details are not described herein again.

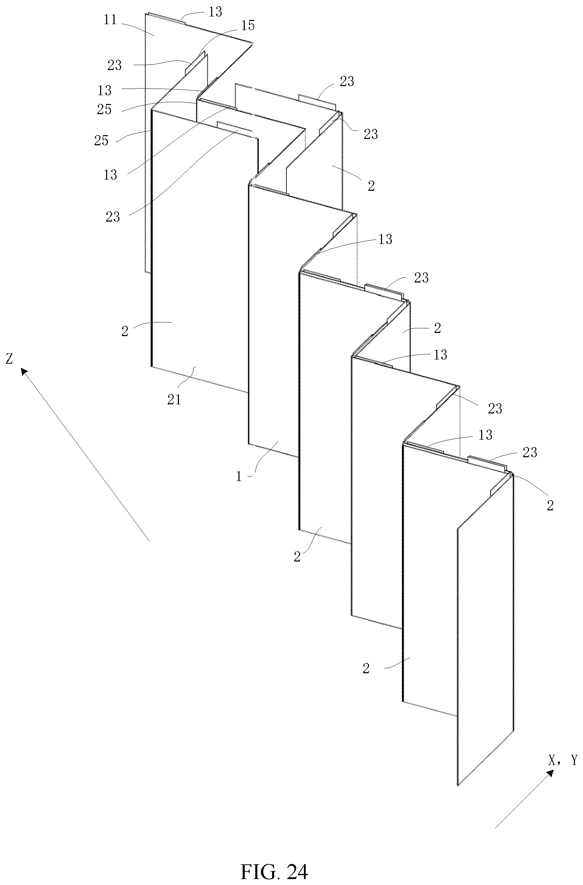

The third embodiment shown in FIG. 23 and FIG. 24 is described below.

As shown in FIG. 23 and FIG. 24, in the third embodiment, the electrode assembly 201 adopts a parallel "Z+U"-shape stacking manner instead of the orthogonal "Z+U"-shape stacking manner. That is, the folding direction (the first direction X) of the first electrode plate 1, which adopts Z-folding, is parallel to the folding direction (the second direction Y) of the second electrode plate 2, which adopts U-folding. After stacking is completed, the stacking direction (namely, the third direction Z) of each laminate is perpendicular to the first direction X, the second direction Y, and a longitudinal direction of the first electrode plate 1. In this case, the longitudinal direction of the first electrode plate 1 is perpendicular to the second direction Y (the first direction X) and the third direction Z.

Furthermore, as shown in FIG. 23 and FIG. 24, in this embodiment, the first electrode plate 1 and the second electrode plate 2 are a negative electrode plate 14 and a positive electrode plate 24 respectively, and the bending portion 25 of the second electrode plate 2 wraps the bending portion 25 of the first electrode plate 1. In addition, any two adjacent second electrode plates 2 are located on opposite sides of the first electrode plate 1 in the first direction X, wrapping different bending portions 25 of the first electrode plate 1. Two second electrode plates 2 come in a pair, wrapping two consecutive bending portions 25 of the first electrode plate 1, while one bending portion 25 of the first electrode plate 1 is located between two adjacent pairs of second electrode plates 2. That is, one bending portion 25 is left not wrapped after two consecutive bending portions 25 of the first electrode plate 1 are wrapped, another bending portion 25 is left not wrapped after another two consecutive bending portions 25 of the first electrode plate 1 are wrapped, and so on. It can be understood that FIG. 24 shows an exploded view of only one pair of second electrode plates 2, and other pairs of second electrode plates 2 are shown in the state of wrapping the first electrode plates 1.

Also, as shown in FIG. 23 and FIG. 24, in this embodiment, the tabs 15 of the first electrode plate 1 and the second electrode plate 2 are located at the edge adjacent to the bending portion 25, and led out in the same direction, namely the same side of the first electrode plate 1 in the longitudinal direction (or a length direction). In this way, the battery cell can be designed with the tabs and electrode terminals being led out from the same side. Two second laminates 21 of the second electrode plate 2 are each provided with a tab 15, and each first laminate 11 of the first electrode plate 1 is provided with a tab 15. All tabs 15 of the first electrode plate 1 and all the tabs 15 of the second electrode plate 2 are arranged in a staggered manner in the first direction X, so as to prevent the positive and negative electrode tabs from interfering with each other. Specifically, in this embodiment, all tabs 15 of the second electrode plate 2 are located at the end, farther away from the bending portion 25, of the edge adjacent to the bending portion 25, while all tabs 15 of the first electrode plate 1 are located at the end, close to the bending portion 25, of the edge connected to the bending portion 25. In this embodiment, the bending portion 25 of the second electrode plate 2 wraps the bending portion of the first electrode plate 1. Therefore, such disposition allows all tabs of the first electrode plate 1 and all tabs of the second electrode plate 2 to be arranged in a staggered manner in the first direction X.

As can be seen, FIG. 23 and FIG. 24 show the parallel "Z+U"-shape stacking manner by using an example in which tabs of the first electrode plate 1 and tabs of the second electrode plate 2 are led out from the same side. However, it should be understood that in the parallel "Z+U"-shape stacking manner, the tab leading-out directions of the first electrode plate 1 and the second electrode plate 2 may alternatively be opposite, that is, being from opposite sides of the first electrode plate 1 in the longitudinal direction.

FIG. 25 to FIG. 32 illustrates an example structure of the second electrode plate 2 in this application.

The second electrode plate 2 is foldable, and is in an unfolded state or a folded state respectively before and after folding. In a finished battery cell 20, the second electrode plate 2 is in the folded state, and corresponding folded states are shown in FIG. 6 to FIG. 24. FIG. 25 to FIG. 32 illustrates the structure of the second electrode plate 2 being opened, that is, the second electrode plate 2 being in an unfolded state.

FIG. 25 shows a first example of the second electrode plate 2. As shown in FIG. 25, in this example, the second electrode plate 2 is provided with an inert region 26, and no active substance 29 is applied to a surface of the inert region 26. Therefore, the inert region 26 is actually part of a current collector not covered by the active substance 29. The surface of the inert region 26 is provided with an insulating substance 27. This can improve the insulation between the positive and negative electrode plates.

Furthermore, referring to FIG. 25, in this example, the second electrode plate 2 is provided with a fold guiding portion 28. The fold guiding portion 28 is provided within the inert region 26 on the second electrode plate 2 and is specifically a crease 282. The crease 282 is a straight crease extending from one edge in the width direction of the second electrode plate 2 to another edge in the width direction of the second electrode plate 2, and the extending direction is parallel to the width direction of the second electrode plate 2. Based on this, when necessary, U-folding of the second electrode plate 2 can be completed simply by folding the second electrode plate 2 in half along the crease 282. The folding process is simpler as compared with the case where the second electrode plate 2 is not provided with the fold guiding portion 28. After the folding, edges of the two second laminates 21 of the second electrode plate 2 are aligned in the width direction, without a deflection. In addition, the crease 282 is provided within the inert region 26. Therefore, after the folding, the inert region 26 includes bending portions 25 that connects two second laminates 21, allowing the inert region 26 to control the area of the portion of the negative electrode plate beyond the positive electrode plate and improving safety.

FIG. 26 and FIG. 27 illustrate a second example of the second electrode plate. Referring to FIG. 26, in this example, the inert region 26 of the second electrode plate 2 is still provided with a fold guiding portion 28, with a difference from the first example shown in FIG. 25 in that the fold guiding portion 28 is no longer the crease 282, but an indentation 281. In this example, the indentation 281 is a continuous straight-line indentation extending from one edge in the width direction of the second electrode plate 2 to another edge in the width direction of the second electrode plate 2, and the extending direction is parallel to the width direction of the second electrode plate 2. In this way, U-folding of the second electrode plate 2 can be completed simply by folding the second electrode plate 2 along the indentation 281, which is simple and convenient. Unlike the crease 282, the indentation 281 has a certain depth in the thickness direction of the second electrode plate 2. Therefore, the indentation 281 can more accurately guide the second electrode plate 2 to fold along the indentation 281, nearly without a deviation. In addition, the indentation 281 can be made directly during production of the second electrode plate 2, without a need for pre-folding after the second electrode plate 2 is processed. Therefore, the processing of the indentation 281 is simple.

FIG. 28 and FIG. 29 illustrate a third example of the second electrode plate. Referring to FIG. 28 and FIG. 29, in this example, the fold guiding portion 28 within the inert region 26 on the second electrode plate 2 is still an indentation 281 and the indentation 281 still extends in the width direction of the second electrode plate 2. However, in this example, the indentation 281 is no longer a continuous straight-line indentation but a dotted-line indentation formed by a plurality of side-by-side small holes spaced apart in the width direction of the second electrode plate 2. These small holes are either through-holes or blind holes. Based on this, the second electrode plate 2 can also be folded in half conveniently.

FIG. 30 and FIG. 31 illustrate a fourth example of the second electrode plate. Referring to FIG. 30 and FIG. 31, in this example, the inert region 26 on the second electrode plate 2 is still provided with a broken-line indentation that is parallel to the width direction of the second electrode plate 2. However, unlike the third example shown in FIG. 28 and FIG. 29, in this example, the broken-line indentation 281 is no longer a dotted-line indent but a dashed-line indentation. Based on this, the second electrode plate 2 can also be folded in half conveniently.

FIG. 32 illustrates a fifth example of the second electrode plate, according to the appended claims. Referring to FIG. 32, the main difference between this example and the foregoing examples shown in FIG. 25 to FIG. 31 lies in that the fold guiding portion 28 is not parallel to the width direction of the second electrode plate 2, but has an included angle with respect to the width direction of the second electrode plate 2. In other words, in this example, the fold guiding portion 28 is deflected with respect to the width direction of the second electrode plate 2. In this way, after folding, two second laminates 21 of the second electrode plate 2 are no longer aligned in the width direction but deflected. This allows the second electrode plate 2 to be opened at an angle after folding, facilitating insertion into the first electrode plate 1. In addition, this also prevent each second laminate 21 from exceeding the first laminate 11 after the second electrode plate 2 is inserted in to the first electrode plate 1, reducing the risk of lithium precipitation.

It should be noted that the fold guiding portion 28 shown in FIG. 32 is a type of continuous straight line. However, the deflected fold guiding portion 28 may alternatively be other structural forms such as a dotted line or dashed line. In addition, the deflected fold guiding portion 28 may be either a crease 282 or an indentation 281.

Referring to FIG. 25 to FIG. 32, in these examples, both ends of the second electrode plate 2 are provided with a tab 15. That is, the two second laminates 21 of the second electrode plate 2 each have a tab 15, and tabs are led from the two laminates from one side. However, it should be understood that this does not constitute a limitation to this application. When only one end of the second electrode plate 2 is provided with a tab 15 and only one of the two second laminates 21 have a tab 15, the second electrode plate 2 can still be provided with the foregoing various types of fold guiding portion 28.

FIG. 33 shows an example in which edges of the second electrode plate 2 are wrapped by two separators 3.

Referring to FIG. 33, in this embodiment, two separators 3 located in the thickness direction on opposite sides of one second electrode plate 2 are folded to form a flange 31, and the flange 31 of the two separators 3 wrap all edges of the second electrode plate 2 not provided with a tab 15. In this way, all edges of the second electrode plate 2 not provided with the tab 15 are wrapped by the flange 31 of the two separators 3. The flange 31 wraps an area of 1-20 mm close to the edge of the second electrode plate 2. During wrapping, the separator 3 located on a first side of the second electrode plate 2 can be folded first, so that the flange 31 formed thereby bypasses a surface of the second electrode plate 2 corresponding to the edge, reaches a second side of the second electrode plate 2, and covers the 1-20 mm area of the corresponding edge close to the surface of the second side to form an inner-layer wrapping. Then, the separator 3 located on the second side of the second electrode plate 2 is folded so that the flange 31 formed thereby bypasses a surface of the second electrode plate 2 corresponding to the edge, reaches the first side of the second electrode plate 2, and covers the 1-20 mm area of the corresponding edge close to the surface of the first side to form an outer-layer wrapping that wraps around the inner-layer wrapping. In this way, two layers of separator wrapping are obtained. When each layer of the separator wrapping is completed, the area wrapped in the separator can be fastened by hot pressing, bonding, or other means. In addition, the wrapping process can be completed before the second electrode plate 2 is folded or sliced.

The double layers of separator wrapping reliably prevent short circuit accidents caused by foreign objects on an edge, neither affecting the overall capacity nor increasing the risk of lithium precipitation. Therefore, the safety performance can be effectively improved as compared with the case where edges of the second electrode plate 2 are not wrapped in the separator 3.

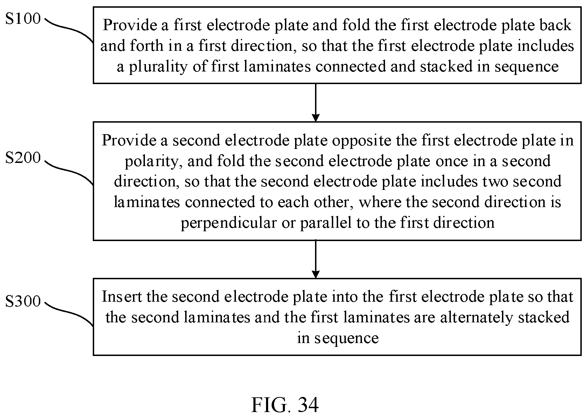

Referring to FIG. 34, based on the preceding embodiments, this application further provides a manufacturing method for an electrode assembly. The method includes the following steps.

S100. Provide a first electrode plate 1 and fold the first electrode plate 1 back and forth in a first direction X, so that the first electrode plate 1 includes a plurality of first laminates 11 connected and stacked in sequence.

S200. Provide a second electrode plate 2 opposite the first electrode plate 1 in polarity, and fold the second electrode plate 2 once in a second direction Y, so that the second electrode plate 2 includes two second laminates 21 connected to each other, where the second direction Y is perpendicular or parallel to the first direction X.

S300. Insert the second electrode plate 2 into the first electrode plate 1 so that the second laminates 21 and the first laminates 11 are alternately stacked in sequence.

This method can be used to manufacture the electrode assembly efficiently. Therefore, the production efficiency of the electrode assembly, the battery cell, the battery, and the electric apparatus can be effectively improved.

The sequence of steps S100 and S200 is not limited. Step S100 may be performed before step S200, or step S100 may be performed after step S200, or step S100 may be performed simultaneously with step S200.

In some embodiments, before the folding the second electrode plate 2 once in the second direction Y, the method further includes: providing two separators 3 in a thickness direction on opposite sides of the second electrode plate 2, and making the two separators 3, provided on opposite sides of one second electrode plate 2 in the thickness direction, fold and wrap an edge of the second electrode plate 2 not provided with a tab 15.

Before the second electrode plate 2 is folded, two separators 3 are used to double-wrap the edge of the second electrode plate 2 not provided with the tab 15. This improves the safety performance of the electrode assembly while facilitating the folding of the second electrode plate 2.

## Claims

1. An electrode assembly (201), comprising:
a first electrode plate (1), being folded back and forth in a first direction (X), so that the first electrode plate (1) comprises a plurality of first laminates (11) connected and stacked in sequence; and
a second electrode plate (2), being opposite the first electrode plate (1) in polarity and being folded once in a second direction (Y), so that the second electrode plate (2) comprises two second laminates (21) connected to each other, wherein the second direction (Y) is perpendicular or parallel to the first direction (X), and the second laminates (21) and the first laminates (11) are alternately stacked in sequence,
**characterized in that**
the second electrode plate (2) is provided with a fold guiding portion (28) to guide folding of the second electrode plate (2),
wherein the fold guiding portion (28) is tilted with respect to a width direction of the second electrode plate (2).

2. The electrode assembly (201) according to claim 1, **characterized in that** a tab (15) of the first electrode plate (1) is located on an edge, other than a bending portion (25), of the first electrode plate (1); and/or a tab (15) of the second electrode plate (2) is located on an edge, other than a bending portion (25), of the second electrode plate (2).

3. The electrode assembly (201) according to claim 2, **characterized in that** the second direction (Y) is perpendicular to the first direction (X), the tab (15) of the first electrode plate (1) is located on an edge of the first electrode plate (1) adjacent to the bending portion (25), and the tab (15) of the second electrode plate (2) is located at an end of the second electrode plate (2) farther away from the bending portion (25) ; or the second direction (Y) is parallel to the first direction (X), the tab (15) of the first electrode plate (1) is located on the edge of the first electrode plate (1) adjacent to the bending portion (25), and the tab (15) of the second electrode plate (2) is located on the edge of the second electrode plate (2) adjacent to the bending portion (25).

4. The electrode assembly (201) according to claim 3, **characterized in that** the second direction (Y) is perpendicular to the first direction (X), only one of any two adjacent first laminates (11) is provided with a tab (15), and the first laminate (11) not provided with a tab (15) is wrapped in the bending portion (25) of the second electrode plate (2).

5. The electrode assembly (201) according to any one of claims 2 to 4, **characterized in that** the tab (15) of the first electrode plate (1) and the tab (15) of the second electrode plate (2) are located on the same side or on opposite sides.

6. The electrode assembly (201) according to claim 5, **characterized in that** the tab (15) of the first electrode plate (1) and the tab (15) of the second electrode plate (2) are located on the same side, and the tab (15) of the first electrode plate (1) and the tab (15) of the second electrode plate (2) are arranged in a staggered manner in the first direction (X).

7. The electrode assembly (201) according to any one of claims 1 to 6, **characterized in that** at least one of the two second laminates (21) of the second electrode plate (2) is provided with a tab (15).

8. The electrode assembly (201) according to any one of claims 1 to 7, **characterized in that** the second electrode plate (2) has an inert region (26), wherein the inert region (26) comprises the bending portion (25) of the second electrode plate (2), and the inert region (26) is not coated with an active substance (29); and wherein preferably,
a surface, facing the first electrode plate (1), of the inert region (26) on the second electrode plate (2) is provided with an insulating substance (27).

9. The electrode assembly (201) according to any one of claims 1-8, **characterized in that** the fold guiding portion (28) comprises an indentation (281) or a crease (282);

10. The electrode assembly (201) according to any one of claims 1-9, **characterized in that** the fold guiding portion (28) is in the form of a solid line or an interrupted line,
wherein preferably, the fold guiding portion (28) is in the form of a broken line; and,
wherein more preferably, the fold guiding portion (28) is in the form of a dotted line or a dashed line.

11. The electrode assembly (201) according to any one of claims 1 to 10, **characterized in that** the electrode assembly (201) comprises a separator (3), wherein the separator (3) separates the first electrode plate (1) from the second electrode plate (2), and two separators (3) provided in a thickness direction on opposite sides of one second electrode plate (2) are folded and wrap an edge of the second electrode plate (2) not provided with a tab (15);
and/or
**characterized in that** the first electrode plate (1) is a negative electrode plate (14) and the second electrode plate (2) is a positive electrode plate (24).

12. A battery cell (20), comprising a housing (202) and **characterized by** further comprising the electrode assembly (201) according to any one of claims 1 to 11, wherein the electrode assembly (201) is provided inside the housing (202).

13. The battery cell (20) according to claim 12, **characterized in that** the tab (15) of the second electrode plate (2) is located at an end of the second electrode plate (2) farther away from the bending portion (25), and the bending portion (25) of the second electrode plate (2) is in contact with an inner wall of the housing (202); and wherein preferably,
a surface, farther away from the first electrode plate (1), of the bending portion (25) of the second electrode plate (2) faces the direction of gravity.

## Patentansprüche

1. Elektrodenanordnung (201), die Folgendes umfasst:
eine erste Elektrodenplatte (1), die in einer ersten Richtung (X) hin- und hergefaltet ist, so dass die erste Elektrodenplatte (1) mehrere erste Laminatschichten (11) umfasst, die nacheinander verbunden und gestapelt sind; und
eine zweite Elektrodenplatte (2), die der ersten Elektrodenplatte (1) hinsichtlich Polarität entgegengesetzt ist und einmal in einer zweiten Richtung (Y) gefaltet ist, so dass die zweite Elektrodenplatte (2) zwei zweite Laminatschichten (21) umfasst, die miteinander verbunden sind, wobei die zweite Richtung (Y) senkrecht oder parallel zu der ersten Richtung (X) ist, und wobei die zweiten Laminatschichten (21) und die ersten Laminatschichten (11) abwechselnd nacheinander gestapelt sind,
**dadurch gekennzeichnet, dass** die zweite Elektrodenplatte (2) mit einem Faltenführungsabschnitt (28) zum Führen der Faltung der zweiten Elektrodenplatte (2) versehen ist,
wobei der Faltenführungsabschnitt (28) mit Bezug auf eine Breitenrichtung der zweiten Elektrodenplatte (2) geneigt ist.

2. Elektrodenanordnung (201) nach Anspruch 1, **dadurch gekennzeichnet, dass** sich eine Lasche (15) der ersten Elektrodenplatte (1) an einer Kante befindet, die kein Biegeabschnitt (25) der ersten Elektrodenplatte (1) ist; und/oder sich eine Lasche (15) der zweiten Elektrodenplatte (2) an einer Kante befindet, die kein Biegeabschnitt (25) der zweiten Elektrodenplatte (2) ist.

3. Elektrodenanordnung (201) nach Anspruch 2, **dadurch gekennzeichnet, dass** die zweite Richtung (Y) senkrecht zu der ersten Richtung (X) ist, sich die Lasche (15) der ersten Elektrodenplatte (1) an einer Kante der ersten Elektrodenplatte (1) angrenzend an den Biegeabschnitt (25) befindet und sich die Lasche (15) der zweiten Elektrodenplatte (2) an einem Ende der zweiten Elektrodenplatte (2) weiter entfernt von dem Biegeabschnitt (25) befindet; oder dass die zweite Richtung (Y) parallel zu der ersten Richtung (X) ist, die Lasche (15) der ersten Elektrodenplatte (1) sich an der Kante der ersten Elektrodenplatte (1) angrenzend an den Biegeabschnitt (25) befindet und die Lasche (15) der zweiten Elektrodenplatte (2) sich an der Kante der zweiten Elektrodenplatte (2) angrenzend an den Biegeabschnitt (25) befindet.

4. Elektrodenanordnung (201) nach Anspruch 3, **dadurch gekennzeichnet, dass** die zweite Richtung (Y) senkrecht zu der ersten Richtung (X) ist, nur eine von zwei beliebigen angrenzenden ersten Laminatschichten (11) mit einer Lasche (15) versehen ist und die erste Laminatschicht (11), die nicht mit einer Lasche (15) versehen ist, in den Biegeabschnitt (25) der zweiten Elektrodenplatte (2) eingehüllt ist.

5. Elektrodenanordnung (201) nach einem der Ansprüche 2 bis 4, **dadurch gekennzeichnet, dass** die Lasche (15) der ersten Elektrodenplatte (1) und die Lasche (15) der zweiten Elektrodenplatte (2) auf derselben Seite oder auf einander gegenüberliegenden Seiten befindlich sind.

6. Elektrodenanordnung (201) nach Anspruch 5, **dadurch gekennzeichnet, dass** die Lasche (15) der ersten Elektrodenplatte (1) und die Lasche (15) der zweiten Elektrodenplatte (2) auf derselben Seite befindlich sind und die Lasche (15) der ersten Elektrodenplatte (1) und die Lasche (15) der zweiten Elektrodenplatte (2) in der ersten Richtung (X) versetzt angeordnet sind.

7. Elektrodenanordnung (201) nach einem der Ansprüche 1 bis 6, **dadurch gekennzeichnet, dass** mindestens eine der zwei zweiten Laminatschichten (21) der zweiten Elektrodenplatte (2) mit einer Lasche (15) versehen ist.

8. Elektrodenanordnung (201) nach einem der Ansprüche 1 bis 7, **dadurch gekennzeichnet, dass** die zweite Elektrodenplatte (2) ein inertes Gebiet (26) aufweist, wobei das inerte Gebiet (26) den Biegeabschnitt (25) der zweiten Elektrodenplatte (2) umfasst und das inerte Gebiet (26) nicht mit einer aktiven Substanz (29) beschichtet ist; und wobei vorzugsweise
eine der ersten Elektrodenplatte (1) zugewandte Oberfläche des inerten Gebiets (26) auf der zweiten Elektrodenplatte (2) mit einer isolierenden Substanz (27) versehen ist.

9. Elektrodenanordnung (201) nach einem der Ansprüche 1-8, **dadurch gekennzeichnet, dass** der Faltenführungsabschnitt (28) eine Einkerbung (281) oder eine Falte (282) umfasst.

10. Elektrodenanordnung (201) nach einem der Ansprüche 1-9, **dadurch gekennzeichnet, dass** der Faltenführungsabschnitt (28) die Form einer durchgezogenen Linie oder einer unterbrochenen Linie aufweist,
wobei vorzugsweise der Faltenführungsabschnitt (28) die Form einer unterbrochenen Linie aufweist; und
wobei weiter bevorzugt der Faltenführungsabschnitt (28) die Form einer gepunkteten Linie oder einer gestrichelten Linie aufweist.

11. Elektrodenanordnung (201) nach einem der Ansprüche 1 bis 10, **dadurch gekennzeichnet, dass** die Elektrodenanordnung (201) einen Separator (3) umfasst, wobei der Separator (3) die erste Elektrodenplatte (1) von der zweiten Elektrodenplatte (2) trennt, und wobei zwei Separatoren (3), die in einer Dickenrichtung auf einander gegenüberliegenden Seiten einer zweiten Elektrodenplatte (2) bereitgestellt sind, gefaltet sind und eine Kante der zweiten Elektrodenplatte (2), die nicht mit einer Lasche (15) versehen ist, einhüllen;
und/oder
**dadurch gekennzeichnet, dass** die erste Elektrodenplatte (1) eine negative Elektrodenplatte (14) ist und die zweite Elektrodenplatte (2) eine positive Elektrodenplatte (24) ist.

12. Batteriezelle (20), die ein Gehäuse (202) umfasst und **dadurch gekennzeichnet ist, dass** sie ferner die Elektrodenanordnung (201) nach einem der Ansprüche 1 bis 11 umfasst, wobei die Elektrodenanordnung (201) innerhalb des Gehäuses (202) bereitgestellt ist.

13. Batteriezelle (20) nach Anspruch 12, **dadurch gekennzeichnet, dass** sich die Lasche (15) der zweiten Elektrodenplatte (2) an einem Ende der zweiten Elektrodenplatte (2) befindet, das weiter von dem Biegeabschnitt (25) entfernt ist, und der Biegeabschnitt (25) der zweiten Elektrodenplatte (2) in Kontakt mit einer Innenwand des Gehäuses (202) ist; und wobei vorzugsweise
eine weiter von der ersten Elektrodenplatte (1) entfernte Oberfläche des Biegeabschnitts (25) der zweiten Elektrodenplatte (2) in Schwerkraftrichtung zeigt.

## Revendications

1. Ensemble d'électrodes (201), comprenant :
une première plaque-électrode (1), pliée en va-et-vient dans une première direction (X), de sorte que la première plaque-électrode (1) comprend une pluralité de premiers stratifiés (11) connectés et empilés successivement ; et
une deuxième plaque-électrode (2), de polarité opposée à celle de la première plaque-électrode (1) et pliée une fois dans une deuxième direction (Y), de sorte que la deuxième plaque-électrode (2) comprend deux deuxièmes stratifiés (21) connectés entre eux, la deuxième direction (Y) étant perpendiculaire ou parallèle à la première direction (X), et les deuxièmes stratifiés (21) et les premiers stratifiés (11) étant empilés en alternance, successivement,
**caractérisé en ce que** la deuxième plaque-électrode (2) est pourvue d'une portion de guidage de pli (28) pour guider le pliage de la deuxième plaque-électrode (2),
dans lequel la portion de guidage de pli (28) est inclinée par rapport à une direction de largeur de la deuxième plaque-électrode (2).

2. Ensemble d'électrodes (201) selon la revendication 1, **caractérisé en ce qu'**une patte (15) de la première plaque-électrode (1) est située sur un bord, autre qu'une portion courbée (25), de la première plaque-électrode (1) ; et/ou une patte (15) de la deuxième plaque-électrode (2) est située sur un bord, autre qu'une portion courbée (25), de la deuxième plaque-électrode (2).

3. Ensemble d'électrodes (201) selon la revendication 2, **caractérisé en ce que** la deuxième direction (Y) est perpendiculaire à la première direction (X), la patte (15) de la première plaque-électrode (1) est située sur un bord de la première plaque-électrode (1) adjacent à la portion courbée (25), et la patte (15) de la deuxième plaque-électrode (2) est située à une extrémité de la deuxième plaque-électrode (2) la plus éloignée de la portion courbée (25) ; ou la deuxième direction (Y) est parallèle à la première direction (X), la patte (15) de la première plaque-électrode (1) est située sur le bord de la première plaque-électrode (1) adjacent à la portion courbée (25), et la patte (15) de la deuxième plaque-électrode (2) est située sur le bord de la deuxième plaque-électrode (2) adjacent à la portion courbée (25).

4. Ensemble d'électrodes (201) selon la revendication 3, **caractérisé en ce que** la deuxième direction (Y) est perpendiculaire à la première direction (X), un seul de deux premiers stratifiés (11) adjacents quelconques est pourvu d'une patte (15), et le premier stratifié (11) dépourvu d'une patte (15) est enroulé dans la portion courbée (25) de la deuxième plaque-électrode (2).

5. Ensemble d'électrodes (201) selon l'une quelconque des revendications 2 à 4, **caractérisé en ce que** la patte (15) de la première plaque-électrode (1) et la patte (15) de la deuxième plaque-électrode (2) sont situées du même côté ou de côtés opposés.

6. Ensemble d'électrodes (201) selon la revendication 5, **caractérisé en ce que** la patte (15) de la première plaque-électrode (1) et la patte (15) de la deuxième plaque-électrode (2) sont situées du même côté, et la patte (15) de la première plaque-électrode (1) et la patte (15) de la deuxième plaque-électrode (2) sont agencées en quinconce dans la première direction (X).

7. Ensemble d'électrodes (201) selon l'une quelconque des revendications 1 à 6, **caractérisé en ce qu'**au moins un des deux deuxièmes stratifiés (21) de la deuxième plaque-électrode (2) est pourvu d'une patte (15).

8. Ensemble d'électrodes (201) selon l'une quelconque des revendications 1 à 7, **caractérisé en ce que** la deuxième plaque-électrode (2) possède une région inerte (26), la région inerte (26) comprenant la portion courbée (25) de la deuxième plaque-électrode (2), et la région inerte (26) n'étant pas revêtue d'une substance active (29) ; et, de préférence,
une surface, faisant face à la première plaque-électrode (1), de la région inerte (26) sur la deuxième plaque-électrode (2) étant pourvue d'une substance isolante (27).

9. Ensemble d'électrodes (201) selon l'une quelconque des revendications 1 à 8, **caractérisé en ce que** la portion de guidage de pli (28) comprend une encoche (281) ou une pliure (282).

10. Ensemble d'électrodes (201) selon l'une quelconque des revendications 1 à 9, **caractérisé en ce que** la portion de guidage de pli (28) prend la forme d'une ligne continue ou d'une ligne interrompue,
de préférence, la portion de guidage de pli (28) prenant la forme d'une ligne brisée ; et,
de préférence encore, la portion de guidage de pli (28) prenant la forme d'une ligne pointillée ou d'une ligne tiretée.

11. Ensemble d'électrodes (201) selon l'une quelconque des revendications 1 à 10, l'ensemble d'électrodes (201) étant **caractérisé en ce qu'**il comprend un séparateur (3), le séparateur (3) séparant la première plaque-électrode (1) de la deuxième plaque-électrode (2), et deux séparateurs (3) disposés dans une direction d'épaisseur de part et d'autre d'une deuxième plaque-électrode (2) étant pliés et enveloppent un bord de la deuxième plaque-électrode (2) dépourvu d'une patte (15) ; et/ou
**caractérisé en ce que** la première plaque-électrode (1) est une plaque-électrode négative (14) et la deuxième plaque-électrode (2) est une plaque-électrode positive (24).

12. Cellule de batterie (20), comprenant un boîtier (202) et **caractérisée en ce qu'**elle comprend en outre l'ensemble d'électrodes (201) selon l'une quelconque des revendications 1 à 11, l'ensemble d'électrodes (201) étant disposé à l'intérieur du boîtier (202).

13. Cellule de batterie (20) selon la revendication 12, **caractérisée en ce que** la patte (15) de la deuxième plaque-électrode (2) est située à une extrémité de la deuxième plaque-électrode (2) la plus éloignée de la portion courbée (25), et la portion courbée (25) de la deuxième plaque-électrode (2) est en contact avec une paroi interne du boîtier (202) ; et, de préférence,
une surface, la plus éloignée de la première plaque-électrode (1), de la portion courbée (25) de la deuxième plaque-électrode (2) étant orientée dans la direction de la gravité.
